# NEUE EUROPÄISCHE PATENTSCHRIFT

(11) **EP 1 529 375 B2**
(45) Veröffentlichungstag und Bekanntmachung des Hinweises auf die Entscheidung über den Einspruch: **20.11.2013**
(45) Hinweis auf die Patenterteilung: 04.04.2007
(21) Anmeldenummer: 02764478.0
(22) Anmeldetag: 08.10.2002
(51) Int. Cl.: H04L 12/28

(54) **VERFAHREN UND SYSTEM FÜR GSM-BILLING BEI WLAN ROAMING**
METHOD AND SYSTEM FOR GSM BILLING DURING WLAN ROAMING
PROCEDE ET SYSTEME DE FACTURATION GSM POUR L'ITINERANCE WLAN

(30) Priorität: 16.08.2002 WO PCT/CH02/00452
(43) Veröffentlichungstag der Anmeldung: 11.05.2005
(73) Patentinhaber: Togewa Holding AG, 3000 Bern 32 (CH)
(72) Erfinder: CONN Jeremy, Richard, CH-8050 Zürich (CH); STADELMANN, Toni, CH-3065 Bolligen (CH); KAUZ, Michael, CH-1012 Lausanne (CH)
(74) Vertreter: Buntz, Gerhard
(86) Internationale Anmeldenummer: PCT/CH2002/000559
(87) Internationale Veröffentlichungsnummer: WO 2004/017565

(56) Entgegenhaltungen:
- WO-A-01/76297
- DE-A1- 10 043 203
- OSTROWSKI F: "ROAMING UND HANDOVER ZWISCHEN UMTS UNK FUNK-LAN" NTZ (NACHRICHTENTECHNISCHE ZEITSCHRIFT), VDE VERLAG GMBH. BERLIN, DE, Bd. 55, Nr. 6, 2002, Seiten 24-26, XP001124094 ISSN: 0027-707X

## Beschreibung

Die vorliegende Erfindung betrifft ein Verfahren und ein System für nahtloses Roaming in heterogenen WLANs, bei welchem zum Billing und Accounting ein mobiler IP-Node über eine drahtlose Schnittstelle innerhalb einer Basic Service Area eines WLANs bei einem Access Server Zugriff auf das WLAN fordert, wobei die Basic Service Area des WLAN ein oder mehrere dem Access Server zugeordnete Access Points umfasst, und der mobile IP-Node mittels einer auf einer SIM-Karte des mobilen IP-Nodes gespeicherte IMSI authentifiziert wird. Insbesondere betrifft die Erfindung ein Verfahren für mobile Nodes in heterogenen WLANs.

In den letzten Jahren ist weltweit die Zahl der Internetbenutzer und damit der dort angebotenen Information exponentiell gestiegen. Obwohl jedoch das Internet weltweit Zugang zu Informationen bietet, hat der Benutzer normalerweise keinen Zugang dazu, bis er nicht an einem bestimmten Netzzugang, wie z.B. im Büro, in der Schule, an der Universität oder zu Hause, angekommen ist. Das wachsende Angebot an IP-fähigen mobilen Geräten, wie z.B. PDAs, Mobilfunktelefone und Laptops, beginnt unsere Vorstellung vom Internet zu verändern. Ein analoger Übergang von fixen Nodes in Netzwerken zu flexibleren Anforderungen durch erhöhte Mobilität hat eben erst begonnen. In der Mobilfunktelefonie z.B. zeigt sich diese Tendenz u.a. auch an neuen Standards wie WAP, GPRS oder UMTS. Um den Unterschied zwischen der momentanen Realität und den IP-Verbindungsmöglichkeiten der Zukunft zu verstehen, kann man sich als Vergleich die Entwicklung der Telefonie Richtung Mobilität in den letzten zwanzig Jahren vors Auge rufen. Der Bedarf im privaten wie auch im geschäftlichen Bereich nach weltweitem unabhängigem drahtlosen Zugriff auf LANs (z.B. in Flughäfen, Städten, etc., etc.) mit Laptops, PDAs etc. ist riesig. Die WLANs, basierend z.B. auf IP, bieten heute jedoch den Service nicht, wie er z.B. mit GSM/GPRS erzeugt wird, der ein freies Roaming der Benutzer erlauben würde. Diese Dienste müssten neben Sicherheitsmechanismen wie im GSM/GPRS ebenfalls Möglichkeiten zur Service Autorisierung und zum Billing, d.h. Verrechnen der beanspruchten Leistung etc., umfassen. Auf der anderen Seite wird ein solcher Dienst auch nicht von bestehenden GSM/GPRS-Betreibern angeboten. Es ist aber nicht nur das Roaming zwischen verschiedenen WLANs wichtig. Durch das grosse Wachstum bei der Informationstechnologie mit WLANs (mit Zugriff auf Internet etc.) und dem ebenfalls grossen Wachstum in der Mobilfunktelefonie ist es sinnvoll, diese beiden Welten zu verknüpft. Erst die Verknüpfung der beiden Welten macht bei wireless LANs ein einfaches und nahtloses Roaming möglich, wie es der Benutzer von der Mobilfunktechnologie gewohnt ist. Somit besteht der Bedarf nach Anbietern, die zwischen unterschiedlichen WLAN-Dienstanbietern und zwischen WLAN-Dienstanbietern und GSM/GPRS-Dienstanbietern ein standartübergreifendes Roaming ermöglichen.

Computernetze oder Local Area Networks (LAN) bestehen üblicherweise aus sog. Nodes, welche verbunden sind über physikalische Medien, wie z.B. Koaxialkabel, Twisted Pair oder optische Glasfaserkabel. Diese LANs werden auch als wired LANs (verdrahtete Festnetze) bezeichnet. In den letzten Jahren sind auch drahtlose LANs, sog. wireless LANs, immer populärer geworden (z.B. durch Entwicklungen wie das AirPort-System der Apple Computer, Inc. etc.). Wireless LANs sind speziell geeignet, um mobile Einheiten (Nodes), wie z.B. Laptops, Notebooks, PDAs (Personal Digital Assistant) oder Mobilfunkgeräte, insbesondere Mobilfunktelefone, mit einer entsprechenden Schnittstelle in ein lokales Computernetzwerk einzubinden. Die mobilen Nodes besitzen einen Adapter, welcher einen Sender/Empfänger sowie eine Kontrollkarte umfasst (wie z.B. Infrarot(IR)-Adapter oder einen Tieffrequenzradiowellen-Adapter). Der Vorteil von solchen mobilen Nodes ist, dass sie innerhalb der Reichweite des wireless LANs frei bewegt werden können. Die mobilen Nodes kommunizieren entweder direkt miteinander (Peerto-Peer wireless LAN) oder schicken ihr Signal an eine Basisstation, welche das Signal verstärkt und/oder weiterleitet. Die Basisstationen können ebenfalls Bridgefunktionen umfassen. Über solche Basisstationen mit Bridge-Funktionen, sog. Access Points (AP), können die mobilen Nodes des drahtlosen LAN auf ein wired LAN zugreifen. Typische Netzwerkfunktionen eines Access Points umfassen das Übertragen von Meldungen von einem mobilen Node zu einem anderen, das Senden von Meldungen vom wired LAN zu einem mobilen Node und das Übertragen von Meldungen eines mobilen Nodes auf das wired LAN. Die physikalische Reichweite eines AP wird Basic Service Area (BSA) genannt. Befindet sich ein mobiler Node innerhalb der BSA eines AP, kann er mit diesem AP kommunizieren, falls der AP ebenfalls innerhalb der Signal-Reichweite (Dynamic Service Area (DSA)) des mobilen Nodes liegt. Mehrere APs sind i.N. einem Access Server zugeordnet, der u.a. die Autorisierung der mobilen Nodes mittels einer Benutzerdatenbank überwacht und verwaltet. Die gesamte Fläche, die von den APs eines Access Servers abgedeckt wird, wird als sog. Hot Spot bezeichnet. Mobile Nodes besitzen typischerweise eine Signalstärke von 100 mWatt bis zu einem Watt. Um das wireless LAN mit dem wired LAN zu verbinden, ist es für den AP wichtig zu bestimmen, ob eine bestimmte Meldung (information frame) auf dem Netz für einen Node bestimmt ist, der innerhalb des wired LAN oder innerhalb des wireless LAN liegt, und diese Information, falls notwendig, an den entsprechenden Node weiterzuleiten. Für diesen Zweck besitzen APs sog. Bridge-Funktionen, z.B. entsprechend dem Standard IEEE Std 802.1D-1990 "Media Access Control Bridge" (31-74 ff). Bei solchen Bridgefunktionen wird ein neuer mobiler Node im wireless LAN typischerweise in einer FDB (Filtering Database) des AP registriert, in dessen Reichweite der Node liegt. Bei jedem Information-Frame auf dem LAN vergleicht der AP die Zieladresse mit den Adressen (MAC-Adressen (Media Access Control Addresses)), welche er im FDB abgespeichert hat und sendet, verwirft oder überträgt den Frame auf das wired LAN bzw. auf das wireless LAN.

Bei mobiler Netzwerkbenutzung sollte ein bestehender IP-Zugriff von Applikationen auf dem mobilen Node nicht unterbrochen werden, wenn der Benutzer seinen Standort im Netzwerk ändert. Im Gegenteil sollten alle Verbindungs- und Schnittstellenänderungen, z.B. bei einem Wechsel in unterschiedlichen Hot Spots, insbesondere unterschiedlichen Netzwerken (Ethernet, Mobilfunknetz, WLAN, Bluetooth etc.) automatisch und nicht interaktiv geschehen können, so dass der Benutzer davon nicht einmal Kenntnis zu haben braucht. Dies gilt auch z.B. während der Benutzung von Real-Time Applikationen. Wirkliches mobiles IP-Computing weist viele Vorteile basierend auf einem jederzeitigen stabilen Zugang zum Internet auf. Mit einem solchen Zugang lässt sich die Arbeit frei und unabhängig vom Schreibtisch aus gestalten. Die Anforderungen an mobile Nodes in Netzwerken unterscheidet sich aber von der eingangs erwähnten Entwicklung in der Mobilfunktechnik auf verschiedene Arten. Die Endpunkte im Mobilfunk sind gewöhnlich Menschen. Bei mobilen Nodes können aber Computerapplikationen Interaktionen zwischen anderen Netzteilnehmern ohne jegliches menschliches Zutun oder Eingreifen ausführen. Beispiele dazu finden sich in Flugzeugen, Schiffen und Automobilen zu Genüge. So kann insbesondere mobiles Computing mit Internet Zugriff zusammen mit anderen Applikationen wie z.B. in Kombination mit Positionsbestimmungsgeräten, wie dem satellitenbasierenden GPS (Global Positioning System) sinnvoll sein.

Eines der Probleme beim mobilen Netzwerkzugriff via Internet Protokoll (IP) ist, dass das IP-Protokoll, welches dazu benutzt wird, die Datenpakete von der Quelladresse (Source Address) zur Zieladresse (Destination Address) im Netz zu routen, sog. IP-Adressen (IP: Internet Protocol) benutzt. Diese Adressen sind einem festen Standort im Netzwerk zugeordnet, ähnlich wie die Telefonnummern des Festnetzes einer physikalischen Dose zugeordnet sind. Wenn die Zieladresse der Datenpakete ein mobiler Node ist, bedeutet das, dass bei jedem Netzwerkstandortwechsel eine neue IP-Netzwerkadresse zugeordnet werden muss, was den transparenten, mobilen Zugriff verunmöglicht. Diese Probleme wurden durch den Mobile IP Standart (IEFT RFC 2002, Okt. 1996) der Internet Engineering Task Force (IETF) gelöst, indem das Mobile IP dem mobilen Node erlaubt, zwei IP-Adressen zu benutzen. Die eine davon ist die normale, statische IP-Adresse (Home-Adresse), die den Ort des Heimnetzes angibt, während die zweite eine dynamische IP Care-Of-Adresse ist, die den aktuellen Standort des mobilen Nodes im Netz bezeichnet. Die Zuordnung der beiden Adressen erlaubt es, die IP-Datenpakete an die richtige, momentane Adresse des mobilen Nodes umzuleiten.

Eines der am häufigsten verwendeten Protokolle zur Authentifizierung eines Benutzers in einem wireless LAN ist das opensource Protokoll IEEE 802.1x (in der aktuellen Version 802.11) der Institute of Electrical and Electronics Engineers Standards Association. Die IEEE 802.1x Authentifizierung erlaubt den authentifizierten Zugriff auf IEEE 802 Medien, wie z.B. Ethernet, Tokenring und/oder 802.11 wireless LAN. Das 802.11 Protokoll erzeugt für wireless LAN, d.h. für drahtlose, lokale Netzwerke, eine 1 oder 2 Mbps Übertragung im 2.4 GHz Band, wobei entweder FHSS (Frequency Hopping Spread Spectrum) oder DSSS (Direct Sequence Spread Spectrum) benutzt wird. 802.1x unterstützt zur Authentifizierung EAP (Extensible Authentication Protocol) und TLS (Wireless Transport Layer Security). 802.11 unterstützt ebenfalls RADIUS. Obwohl die RADIUS-Unterstützung bei 802.1x optional ist, ist zu erwarten, dass die meisten 802.1x Authenticators RADIUS unterstützen werden. Das IEEE 802.1x Protokoll ist ein sog. Port-basierendes Authentifizierungsprotokoll. Es kann in jeder Umgebung verwendet werden, in welcher ein Port, d.h. eine Interface eines Gerätes, bestimmt werden kann. Bei der Authentifizierung basierend auf 802.1x können drei Einheiten unterschieden werden. Das Gerät des Benutzers (Supplicant/Client), den Authenticator und den Authentifikationsserver. Der Authenticator ist dafür zuständig, den Supplicant zu authentifizieren. Authenticator und Supplicant sind beispielsweise über ein Point-to-Point LAN Segment oder eine 802.11 wireless Link verbunden. Authenticator und Supplicant besitzen einen definierten Port, eine sog. Port Access Entity (PAE), die einen physikalischen oder virtuellen 802.1x Port definiert. Der Authentifikationsserver erzeugt die vom Authenticator benötigten Authentifikationsdienste. So verifiziert er die vom Supplicant gelieferten Berechtigungsdaten bezüglich der beanspruchten Identität.

Die Authentifikationsserver basieren meistens auf RADIUS (Remote Authentication Dial-In User Service) der IETF (Internet Engineering Task Force). Die Benutzung des RADIUS Authentifizierungsprotokoll und Accountsystems ist weit verbreitet bei Netzwerkeinheiten, wie z.B. Router, Modemserver, Switch etc. und wird von den meisten Internet Service Providern (ISP) benutzt. Wählt sich ein Benutzer bei einem ISP ein, muss er normalerweise einen Benutzernamen und ein Passwort eingeben. Der RADIUS-Server überprüft diese Information und autorisiert den Benutzer zum ISP-System. Der Grund für die Verbreitung von RADIUS liegt u.a. darin, dass Netzwerkeinheiten im allgemeinen nicht mit einer sehr grossen Anzahl Netzbenutzer mit jeweils unterschiedlicher Authentifizierungsinformation umgehen können, da dies z.B. die Speicherkapazität der einzelnen Netzwerkeinheiten übersteigen würde. RADIUS erlaubt die zentrale Verwaltung von einer Vielzahl von Netzwerkbenutzern (Hinzufügen, Löschen von Benutzern etc.). So ist das z.B. bei ISP (Internet Service Providern) eine notwendige Voraussetzung für ihren Dienst, da ihre Benutzeranzahl häufig mehrere tausend bis mehrere zehntausend Benutzer umfasst. RADIUS erzeugt weiter einen bestimmten permanenten Schutz vor Hackern. Die Remoteauthentifizierung von RADIUS basierend auf TACACS+ (Terminal Access Controller Access Control System+) und LDAP (Lightweight Directory Access Protocol) ist gegen Hacker relativ sicher. Viele andere Remote Authentifizierungsprotokolle haben dagegen nur einen zeitweisen, ungenügenden oder gar keinen Schutz vor Hackerangriffen. Ein anderer Vorteil ist, dass RADIUS zur Zeit der de-facto Standard für Remote Authentifizierung ist, womit RADIUS auch von fast allen Systemen unterstützt wird, was bei anderen Protokollen nicht der Fall ist.

Das oben erwähnte Extensible Authentication Protocol (EAP) ist eigentlich eine Erweiterung zum PPP (Point-to-Point Protocol) und ist definiert durch das Request for Comments (RFC) 2284 *PPP Extensible Authentification Protocol (EAP)* der IETF. Mittels PPP lässt sich ein Computer z.B. an den Server eines ISP anbinden. PPP arbeitet im Data Link Layer des OSI Model und schickt die TCP/IP-Pakete des Computers an den Server des ISP, der das Interface zum Internet bildet. Im Gegensatz zum älteren SLIP Protokoll (Serial Line Internet Protocol) arbeitet PPP stabiler und besitzt Fehlerkorrekturen. Das Extensible Authentication Protocol ist ein Protokoll auf einem sehr allgemeinen Level, das die verschiedensten Authentifizierungsverfahren unterstützt, wie z.B. Token Cards, Kerberos des Massachusetts Institute of Technology (MIT), Streichlisten-Passwörter, Zertifikate, Public Key Authentication und Smartcards oder sog. Integrated Circuit Cards (ICC). IEEE 802.1x definiert die Spezifikationen, wie EAP in die LAN-Frames intergriert sein müssen. Bei Kommunikation in drahtlosen Netzwerken mittels EAP verlangt ein Benutzer über die drahtlose Kommunikation bei einen Access Point (AP), d.h. eines Verbindungs-HUP für den Remote Access Client oder Supplicant zum WLAN, Zugriff auf das wireless LAN. Der AP fordert darauf vom Supplicant die Identifikation des Benutzers und übermittelt die Identifikation an den oben genannten Authentifikationsserver, der z.B. auf RADIUS basiert. Der Authentifikationsserver lässt den Access Point die Identifikation des Benutzers rücküberprüfen. Der AP holt sich diese Authentifizierungsdaten vom Supplicant und übermittelt diese an den Authentifikationsserver, der die Authentifizierung beendet.

Bei EAP erzeugt ein beliebiges Authentifizierungsverfahren eine Remote Access Verbindung. Das genaue Authentifikationsschema wird jeweils zwischen dem Supplicant und dem Authenticator (d.h. dem Remote Access Server, dem Internet Authentification Service (IAS) Server bzw. bei WLAN dem Access Point) festgelegt. Wie oben erwähnt, unterstützt EAP dabei viele unterschiedliche Authentifikationsschemata, wie z.B. generische Token Card, MD5-Challenge, Transport Level Security (TLS) für Smartcards, S/Key und mögliche zukünftige Authentifizierungstechnologien. EAP erlaubt eine von der Anzahl nicht beschränkte Frage-Antwort-Kommunikation zwischen Supplicant und Authenticator, wobei der Authenticator bzw. der Authentifikationsserver spezifische Authentifizierungsinformation verlangt und der Supplicant, d.h. der Remote Access Client antwortet. Beispielsweise kann der Authentifikationsserver über den Authenticator bei den sog. Security Token Cards einzeln zuerst einen Benutzernamen, dann eine PIN (Personal Identity Number) und schlussendlich einen Token Card Value vom Supplicant verlangen. Bei jedem Frage-Antwort-Durchgang wird dabei ein weiterer Authentifizierungslevel durchgeführt. Werden alle Authentifizierungslevels erfolgreich beantwortet, ist der Supplicant authentifiziert. Ein spezifisches EAP Authentifikationsschema wird als EAP-Typ bezeichnet. Beide Seiten, d.h. Supplicant und Authenticator müssen den gleichen EAP-Typ unterstützen, damit die Authentifizierung durchgeführt werden kann. Wie erwähnt, wird dies zu Beginn zwischen Supplicant und Authenticator festgelegt. Authentifikationsserver basierend auf RADIUS unterstützen im Normalfall EAP, was die Möglichkeit gibt, EAP-Meldungen an einen RADIUS-Server zu schicken.

Im Stand der Technik sind ebenfalls EAP-basierende Verfahren zur Authentifizierung eines Benutzers und zur Vergabe von Sessions Keys an den Benutzer mittels des GSM Subscriber Identity Modul (SIM) bekannt. Die GSM Authentifizierung basiert auf einem Frage-Antwort-Verfahren, einem sog. Challenge-Response Verfahren. Dem Authentifikationsalgorithmus der SIM-Karte wird als Challenge (Frage) eine 128-bit Zufallszahl (üblicherweise bezeichnet als RAND) gegeben. Auf der SIM-Karte läuft dann ein für den jeweiligen Operator spezifischer, vertraulicher Algorithmus, der als Input die Zufallszahl RAND und einen geheimen, auf der SIM-Karte gespeicherten Schlüssel Ki erhält und daraus eine 32-bit Antwort (SRES) und ein en 64-bit-Schlüssel Kc generiert. Kc ist zur Verschlüsslung des Datentransfers über drahtlose Schnittstellen gedacht (GSM Technical Specification GSM 03.20 (ETS 300 534): "Digital cellular telecommunication system (Phase 2); Security related network functions", European Telecommunications Standards Institute, August 1997). Bei der EAP/SIM Authentifizierung werden mehrere RAND Challenge zum Generieren von mehreren 64-bit Kc-Schlüsseln verwendet. Diese Kc-Schlüssel werden zu einem längeren Session Key kombiniert. Mit EAP/SIM erweitert das normale GSM Authentifizierungsverfahren, indem die RAND-Challenges zusätzlich einen Message Authentification Code (MAC) besitzen, um gegenseitige Authentifizierung zu erzeugen. Um die GSM-Authentifizierung durchzuführen, sollte der Authentifikationsserver ein Interface zum GSM-Netzwerk besitzen. Der Authentifikationsserver arbeitet folglich als ein Gateway zwischen Internet Authentification Service (IAS) Server Netzwerk und der GSM-Authentifikationsinfrastruktur. Zu Beginn der EAP/SIM Authentifizierung verlangt der Authentifikationsserver mit einem ersten EAP-Request durch den Authenticator vom Supplicant u.a. die International Mobile Subscriber Identity (IMSI) des Benutzers. Mit der IMSI erhält der Authentifikationsserver auf Anfrage vom Authentifikationszenter (AuC) des entsprechenden Mobilfunknetz-Dienstanbieters, üblicherweise im GSM-Netzwerk als Home Location Register (HLR) bzw. Visitor Location Register (VLR) bezeichnet, n GSM-Triplets. Von den Triplets erhält der Authentifikationsserver ein Message Authentification Code für n*RAND und eine Lebensdauer für den Schlüssel (zusammen MAC_RAND) sowie einen Session Schlüssel. Mit diesen kann der Authentifikationsserver die GSM-Authentifizierung auf der SIM-Karte des Supplicant bzw. des Benutzers durchführen. Da RAND zusammen mit dem Message Authentification Code MAC_RAND an den Supplicant gegeben wird, wird es für den Supplicant möglich zu überprüfen, ob die RANDs neu sind und durch das GSM-Netzwerk generiert wurden.

Für das Billing der von mobilen Einheiten beanspruchten Leistung in GSM-Netzwerken ist im Stand der Technik das sog. TAP-Protokoll (TAP: Transferred Account Procedure) der Transferred Account Data Interchange Group (TADIG) der GSM-Vereinigung bekannt. GSM beruht auf dem Konzept des Roaming, was einem Benutzer eines Mobilfunkgerätes erlaubt, ihr Mobilfunkgerät in jedem beliebigen Land und Netzwerk zu benutzen. Das Billing der beanspruchten Leistung ist dabei keinesfalls aber trivial. Heute sind weltweit mehr als 400 GSM-Netzwerke in Betrieb und dazu existieren schätzungsweise mehr als 20'000 individuelle Roaming-Vereinbarungen zwischen den Netzwerkbetreibern. Um das Billing zu ermöglichen liegt folglich hinter der scheinbar einfachen Idee des Roamings ein äusserst komplexer Prozess von Informationserfassung, Informationsverteilung und Informationsauswertung. Das Transferred Account Procedure Protokoll (TAP) ist ein Verfahren, durch welches Mobilfunknetzdienstanbieter Roaming Billing Informationen austauschen. Am 04. Juni 2000 wurde nach TAP2 und TAP2+ schliesslich TAP3 lanciert. TAP3 kann heute als der Standard bezeichnet werden, obwohl TAP ein sich weiterentwickelndes Protokoll ist.

Der meiste Voice- oder Datenverkehr in GSM-Netzwerken kommt oder endet in einem anderen Netzwerk, als der mobile Benutzer zur Zeit ist. Der Betreiber eines lokalen Netzwerkes erhebt Gebühren für jeden Anruf, der bei einem seiner Benutzer endet, unabhängig davon, ob es sich um ein Festnetz oder ein Mobilfunknetz handelt. Deshalb vereinbaren die lokalen Fixnetzbetreiber mit den lokalen Mobilfunknetzbetreibern gegenseitig Übereinkommen, um das Erheben der Gebühren zu vereinfachen. Damit ist es dann auch nicht notwendig, dass, um einen Anruf eines Schweizer Mobilfunknetzbenutzer zu einem kanadischen Festnetznetzbe nutzer zu verrechnen, der Schweizer Mobilfunknetzbetreiber mit dem kanadischen Festnetznetzanbieter ein Übereinkommen schliesst. Normalerweise hat der Schweizer Festnetzanbieter mit dem kanadischen Festnetzanbieter bereits ein Übereinkommen betreffend Verrechnungsart und Gebühren geschlossen und der Schweizer Mobilfunknetzbetreiber verrechnet über den Schweizer Festnetzanbieter mit einer entsprechenden Vereinbarung. Die Kosten werden üblicherweise entweder direkt (retail billing) oder über einen Service Provider (wholesale billing) dem Benutzer verrechnet. Die Art des Verrechnens von Roaming-Daten- oder Voiceverkehr zwischen unterschiedlichen Mobilfunknetzen (PMN: Public Mobile Network) erfolgt mittels des TAP-Protokolls. Roaming Call Records werden typischerweise entweder als TAP oder als CIBER (Cellular Intercarrier Billing Exchange Roamer) Records erstellt. CIBER Records werden von Mobilfunknetzbetreibern benutzt, welche mit AMPS basierenden Technologien arbeiten, wie z.B. AMPS, IS-136 TDMA und IS-95 CDMA. TAP wird vor allem von GSM-Mobilfunknetzdienstanbieter benutzt und ist das Hauptprotokoll für Verrechnungen in GSM-dominierten Gebieten.

Details eines Anrufes durch einen Benutzer, der sich in einem fremden Netzwerk (VPLMN: Visited Public Landbased Mobile Network) befindet, wird in einem Mobile Switching Center (MSC) des Netzwerkes registriert. Jeder Anruf erzeugt so ein oder mehrere Anrufrekords. Der GSM-Standart für diese Rekords ist in GSM 12.05 definiert, obwohl viele Anbieter ihre eigenen Formate benutzen. Die Anrufrekords des MSC werden zu einem Billing-System des VPLMN zur Verrechnung übertragen. Diese Anrufrekords werden dann in TAP-Format konvertiert und dem entsprechenden Benutzer zugeordnet. Spätestens innerhalb von 36 Stunden werden die TAP-Rekords an den entsprechenden Mobilfunknetzdienstanbieter versandt. Die TAP-Files enthalten zusätzlich Informationen bezüglich des Anbieter-Leistungstarifs (IOT: Inter Operator Tariff) und alle weiteren bilateralen Vereinbarungen und Vergünstigungsschemen. Die TAP-Rekords werden direkt oder üblicher über ein Verrechnungsstelle, wie z.B. ein Clearinghaus, geschickt. Erhält der Heimnetzwerkbetreiber (HPMN: Home Public Mobile Network) ein TAP-Rekord vom VPLMN, wird dieses in ein entsprechendes internes Format konvertiert und zusammen mit den normalen Anrufrekords des Benutzers, welche er im Heimnetzwerk erzeugt, verrechnet. Bei Wholesale Billing, bei dem ein Service Provider die anfallenden Kosten dem Benutzer verrechnet, leitet das HPMN die Records weiter an den Service Provider, der die Anrufe insbesondere auch gemäss eigenen Tarifen neu verrechnen kann und die Abrechnung mit z.B. Anrufdetails für den Benutzer erzeugt.

TAP3 unterstützt eine Vielzahl von Diensten. TAP3 wird heute für das Billing zwischen GSM-Dienstanbietern und GSM-Dienstanbietern, GSM-Dienstanbietern und Nicht-GSM-Dienstanbietern (Inter-Standard Roaming) und GSM-Dienstanbietern und Satelliten-Dienstanbietern etc. verwendet. Die drei grundlegenden Dienstkategorien Voice, Fax und sog. Supplementary Services werden bereits seit TAP1 unterstützt. Das Billing von Short Message Service (SMS) ist wegen der Benutzung von Short Message Service Center (SMS-C) Dritter hingegen weniger trivial. Folgende Gründe erschweren das Billing von SMS: 1. Ein Roaming-Benutzer kann während dem Roaming eine SMS empfangen (MT-SMS), 2. Ein Roaming-Benutzer kann während dem Roaming eine SMS (MO-SMS) versenden, indem er die SMS-C seines Heimnetzwerkes benutzt und 3. Ein Roaming-Benutzer kann während dem Roaming eine SMS (MO-SMS) versenden, indem er die SMS-C eines fremden Netzwerkes benutzt. Das Billing von SMS-Diensten wird deshalb erst ab TAP2+ voll unterstützt. Ab TAP3 wird weiter das Billing von Single Circuit Switched Data, HSCSD (High Speed Circuit Switched Data) und GPRS (General Packet Radio Service) unterstützt. TAP3 unterstützt ebenfalls alle Value Added Services (VAS), wie z.B. das sog. Billing for Content. Das Verrechnen von Value Added Services ist jedoch häufig schwierig, da es das Einverständnis des Dienstanbieters zu den verrechneten Diensten voraussetzt. Customised Application Mobile Enhanced Logic (CAMEL) wird ab TAP3.4 unterstützt. CAMEL ist besonders für Anwendungen bei Prepaid-Diensten für Roaming Benutzer wichtig und dürfte in Zukunft stark an Bedeutung gewinnen. Eine andere wichtige Anwendung von TAP3 ist die Unterstützung von Verrechungen gestützt auf Inter Operator Tariff (IOT). IOT ermöglicht dem Heimnetzwerkdienstanbieter (HPMN) spezielle Angebote und Tarife eines fremden Dienstanbieters (VPMN) zu überprüfen und an den Roaming-Benutzer weiterzugeben. So kann z.B. der VPMN Vergünstigungen oder Discounts für unterschiedliche Anrufdienste oder -levels geben und der HPMN kann diese einfach verifizieren und seine Tarife anpassen. Die Möglichkeit des Verrechnens von Roaming-Diensten unabhängig davon, wo sich der Benutzer gerade befindet, ist ein wertvolles Hilfsmittel für Mobilnetzdienstanbieter und verhindert den Verlust von Einnahmen bei zwischenzeitlichen Vergünstigungen durch einen VPMN. Das TAP-Protokoll umfasst ab TAP3 ebenfalls detaillierte Informationen, von wo ein Anruf genau getätigt wurde, bzw. ein Dienst in Anspruch genommen wurde etc., und wo er hingeleitet wurde. Diese Information hilft ein Profil des jeweiligen Benutzers basierend auf seinem Verhalten aufzustellen, was wichtige Informationen liefert, um das Angebot der Dienste auf die Bedürfnisse der Benutzer anzupassen und zu optimieren. Insbesondere kann es dazu verwendet werden, spezielle Location Based Services, wie z.B. Sport- oder Konzertveranstaltungen etc., anzubieten. Schliesslich erlaubt mit dem Returned Accounts Procedure (RAP) Protokoll TAP3 auch ein differenziertes Errorhandling. So kann mit RAP der HPMN u.a. eingehende TAP-Files auf ihre Gültigkeit und Konformität mit dem TAP-Standart überprüfen und falls notwendig verwerfen, ohne dass damit Verrechnungen von Leistungen verloren gingen.

Weiterhin offenbart die WO 01 76 297 A (NOKIA MOBILE PHONES LTD.) 11.10.2001 ein Verrechnungsverfahren in einem Paketdatennetz.

Der Stand der Technik hat jedoch verschiedenste Nachteile. Zwar ist es möglich, z.B. mit einer EAP-SIM die Authentifizierungsverfahren von den GSM-Netzwerken in der wireless LAN-Technologie zur Authentifizierung von Supplicants bzw. Remote Access Clients zu verwenden, vorausgesetzt der Benutzer besitzt eine IMSI bei einem GSM Dienstanbieter. Ebenso ist es prinzipiell möglich, mittels z.B. Mobile IP der IEFT (Internet Engineering Task Force) Datenströme zum entsprechenden bei einem Access Servers über einen Access Point angemeldeten mobilen Remote Access Client umzuleiten (routen). Damit sind jedoch bei weitem nicht alle Probleme der mobilen Netzwerkbenutzung gelöst, welche ein wirklich freies Roaming des Benutzers erlauben würden. Eines der Probleme ist, dass im IP-Netzwerk die im GSM Standart benötigten Voraussetzungen bezüglich Sicherheit, Billing und Service Autorisierung nicht mehr gegeben. Dies hängt intrinsisch mit der offenen Architektur des IP-Protokolles zusammen. D.h., viele Informationen fehlen im IP-Standard, die zur vollen Kompatibilität mit den GSM-Netzwerken unbedingt benötigt werden. Zudem liefert ein Access Server beruhend z.B. auf RADIUS ein einzelner Datenstrom. Dieser kann nicht ohne weiteres auf den mehrteiligen Datenstrom des GSM-Standards gemappt werden. Ein anderer Nachteil des Standes der Technik ist, dass wireless LAN heute auf individuellen Hot Spots (d.h. der Basic Service Area der Access Points eines Access Servers) beruhen, die von unterschiedlichen Software- und Hardwareentwicklern der ganzen Welt angeboten werden. Dies erschwert die Zusammenführung beider Welten, da solche Gateway-Funktionen jeweils an die spezifische Lösung angepasst werden müssen. Die technischen Spezifikationen zum GSM Authentifikations-Interface könne in MAP (Mobile Application Part) GSM 09.02 Phase 1 Version 3.10.0 gefunden werden.

Es ist eine Aufgabe dieser Erfindung, ein neues Verfahren für mobile Nodes in heterogenen WLANs vorzuschlagen. Insbesondere soll einem Benutzer ermöglicht werden, problemlos sich zwischen verschiedenen Hot Spots zu bewegen (roaming), ohne dass er sich um Anmeldung, Billing, Service Autorisation etc. bei den verschiedenen WLAN-Dienstanbietern bemühen müsste, d.h. den gleichen Komfort geniesst, wie er es von der Mobilfunktechnologie , wie z.B. GSM, gewohnt ist.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zur Leistungserfassung und -verrechnung bei Roaming eines mobilen IP-Node in heterogenen WLANS der mobile IP-Node über eine drahtlose Schnittstelle innerhalb einer Basic Service Area eines WLANs auf einen Access Point eines WLAN zugreift und die Basic Service Area des WLAN einen oder mehrere einem Access Server zugeordnete Access Points umfasst, bei welchem der mobile IP-Node auf einen Request des Access Servers eine auf einer SIM-Karte des mobilen IP-Nodes gespeicherte IMSI an den Access Server übermittelt und die IMSI des IP-Nodes in einer Datenbank eines SIM-RADIUS-Moduls gespeichert wird, wobei ein SIM-Radius-Modul mittels einer SIM-Benutzerdatenbank und einem SIM-Gateway-Modul den logischen IP-Datenkanal des WLAN zu entsprechenden GSM-Daten für Signal- und Datenkanäle eines GSM-Netzwerkes benutzerspezifisch ergänzt, mittels welchen ergänzten Signal- und Datenkanälen eine Authentifizierung und/oder Service Autorisierung des mobilen IP-Nodes basierend auf der IMSI der SIM-Karte des mobilen Nodes bei einem HLR und/oder VLR eines GSM-Netzwerkes durchführt wird, wobei ein Billing-Modul mittels eines Billing-Gateway-Interfaces auf den Access Server zugreift, mittels welchem Billing-Gateway-Interfaces erste Call Detail Records des mobilen IP-Nodes vom Access Server auf das Billing-Modul übertragen werden und welches Billing Gateway Interface eine zugeordnete Billing-Management-Datenbank mit dem Konfigurationsprofil jedes Access Servers umfasst, wobei zweite Call Detail Records des mobilen IP-Nodes an ein Proxy-Modul übermittelt werden, welches Proxy-Modul mindestens Identität des mobilen IP-Nodes und/oder Zeitdauer und/oder Anbieter der beanspruchten Leistung erfasst und an das Billing-Modul weitergibt, und wobei das Billing-Modul entsprechend der beanspruchten Leistung basierend auf den Daten des Proxy-Modul und den ersten Call Detail Records TAP-Files erzeugt und diese zusammen mit Fakturierungsanweisungen an ein Clearing-Modul übermittelt, welche Fakturierungsanweisungen mindestens benutzerspezifische und/oder dienstanbieterspezifische Verrechnungsdaten umfassen, und welches Clearing-Modul die beanspruchte Leistung des Benutzer einem Anbieter eines Festnetzes verrechnet und/oder die TAP-Files zur Verrechnung an einen GSM Dienstanbieter übermittelt. Ein erstes Call Detail Rekord kann in einer Ausführungsvariante z.B. nur SIM-basierende Authentifikationsinformation umfassen. Ein zweites Call Detail Rekord kann als Ausführungsvariante z.B. mindestens basierend auf der IP-Adresse des mobilen IP-Nodes und Identifikationen der Dienstanbieter, deren Leistung vom mobilen Node beansprucht wurde, erstellt sein. Die Billing-Management-Datenbank kann z.B. IP-Adressen und/oder GSM-Identitifizierung der Benutzer und/oder Dienstanbieter umfassen. Die ersten Call Detail Records des mobilen IP-Nodes, die vom Access Server zum Billing-Modul übermittelt werden, können u.a. SIM-basierend erstellt sein, während die zweiten Call Detail Records, die vom Access Server zum Proxy-Modul übermittelt werden, IP-basierend wie z.B. auf RADIUS-Informationen erstellt sein können. Dies hat u.a. den Vorteil, dass ein nahtloses Roaming zwischen unterschiedlichen und heterogenen WLANs möglich wird. Durch das Verbinden der WLAN-Technologie, insbesondere der IP-Netzwerke, mit der GSM-Technologie wird das Roaming des Benutzers möglich, ohne dass er sich um Anmeldung, Billing, Service Autorisation etc. bei den verschiedenen WLAN-Dienstanbietern bemühen müsste, d.h., dass der Benutzer den gleichen Komfort geniesst, wie er es von der Mobilfunktechnologie, wie z.B. GSM, gewohnt ist. Gleichzeitig ist es auf eine völlig neue Art möglich, die Vorteile der offenen IP-Welt (Zugang zum weltweiten Internet etc.) mit den Vorteilen (Sicherheit, Billing, Service Autorisation etc.) zu verbinden. Die Erfindung erlaubt auch ein Verfahren für ein Roaming in WLANs zu erzeugen, ohne dass bei jedem Access Server in entsprechendes Modul eingebaut werden müsste. Im Gegenteil kann die Infrastruktur (WLAN/GSM) durch die Verwendung von RADIUS unverändert übernommen werden.

In einer Ausführungsvariante wird der Datenstrom des mobilen IP-Nodes beim Zugriff auf das WLAN vom Access Point über einen Mobilfunknetzdienstanbieter geleitet. Dies hat u.a. den Vorteil, dass der Mobilfunknetzdienstanbieter vollständige Kontrolle über den Datenfluss hat. So kann er spezifisch Service-Autorisationen vergeben, detailliertes Billing durchführen und Sicherheitsmechanismen einbauen. U.a. kann er damit die offene, schwierig zu kontrollierende IP-Welt mit beispielsweise dem Internet, mit den Vorteilen der GSM-Welt verbinden. Dies spielt gerade in neuerer Zeit, z.B. bezüglich Haftungsfragen des Providers oder Dienstanbieters, eine grosse Rolle.

In einer anderen Ausführungsvariante werden die TAP-Files mindestens basierend auf Inter Operator Tariffs sowie Public Mobile Network TAP Identification Codes erstellt. In Kombination dazu oder als eigenständige Ausführungsvariante ist es z.B. ebenfalls vorstellbar, dass die Billing-Management-Datenbank Inter Operator Tariffs sowie Public Mobile Network TAP Identification Codes umfasst. Diese Ausführungsvariante hat u.a. den Vorteil, dass der Heimnetzdienstanbieter (HPMN) einfach die IOT des Fremdnetzdienstanbieters (VPMN), in welchem sich der Benutzer zur Zeit befindet (roaming), verifizieren kann. Damit kann der VPMN z.B. Vergünstigungen für spezifische Verbindungen geben und der HPMN kann kontrollieren, dass diese korrekt angewendet wurden. Unabhängig von irgendwelchen Vergünstigungsprogrammen oder Anruflevels des VPMN, kann der HPMN damit auch einfach jede Verbindung und/oder jeden Anruf gemäss seinen eigenen Tarifen neu berechnen etc. Die Möglichkeit des Bestimmens der Preise für Leistungen unabhängig davon, in welchem Fremdnetz und/oder Heimnetz sich der Benutzer gerade befindet, kann ein wertvolles Mittel bei der Verrechnung von Leistungen für einen HPMN sein, mit welchem es sich z.B. vermeiden lässt, besondere Gebührenermässigungen eines VPMN zu verlieren. Ebenso lassen sich damit bestimmte Verrechnungsschemen für einen HPMN erst realisieren, wie z.B. spezielle Preise für Verbindungen mit dem Heimnetz und/oder Heimatland des Benutzers oder/oder z.B. Anrufe innerhalb Ländergemeinschaften wie beispielsweise Europa etc.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegten Figuren illustriert:

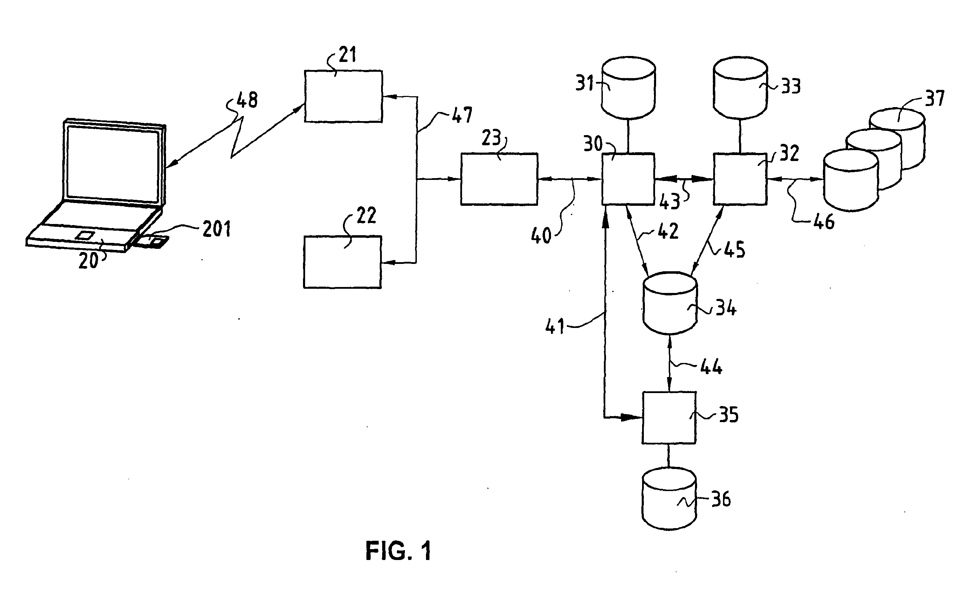

Figur 1 zeigt ein Blockdiagramm, welches schematisch ein erfindungsgemässes Verfahren und ein System zur Authentifizierung eines Benutzers bei Roaming in heterogenen WLANs illustriert, wobei mobile IP-Nodes 20 über eine kontaktbehaftete Schnittstelle mit einer SIM-Karte 201 verbunden sind und mittels einer drahtlosen Verbindung 48 auf Access Points 21/22 des WLAN zugreifen. Ein Access Server 23 des WLAN authentifiziert den mobilen IP-Node 20 basierend auf einer auf der SIM-Karte 201 abgespeicherten IMSI bei einem HLR 37 und/oder VLR 37 eines GSM-Mobilfunknetzes.

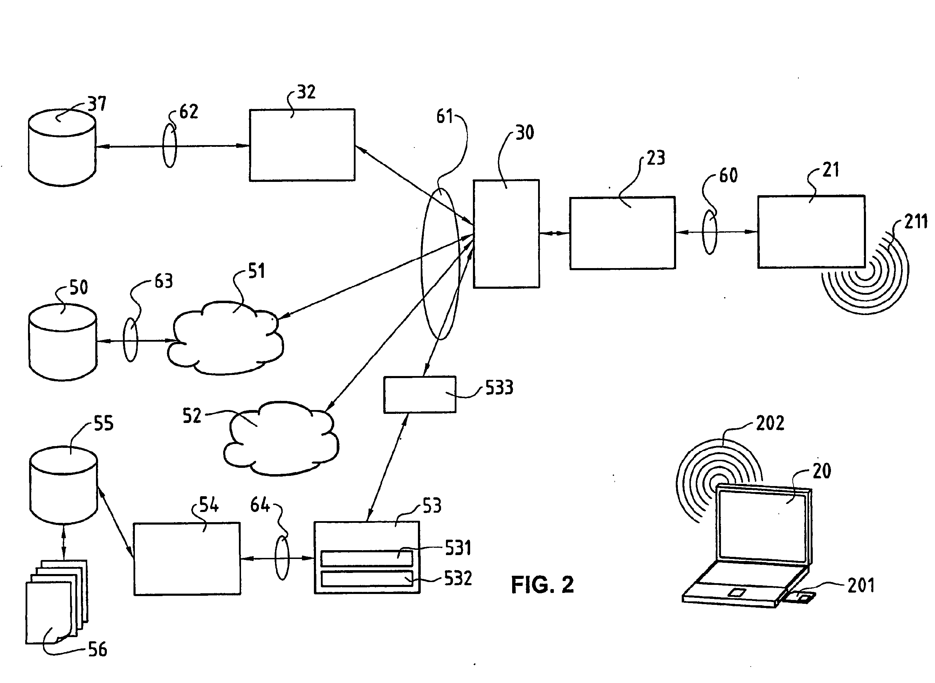

Figur 2 zeigt ein Blockdiagramm, welches schematisch ebenfalls ein erfindungsgemässes Verfahren und ein System zur Authentifizierung eines Benutzers bei Roaming in heterogenen WLANs illustriert, wobei mobile IP-Nodes 20 über eine kontaktbehaftete Schnittstelle mit einer SIM-Karte 201 verbunden sind und mittels einer drahtlosen Verbindung 48 auf ein WLAN zugreifen. Das WLAN ist über einen Access Server 23 mit einem GSM-Mobilfunknetz, insbesondere einem HLR 37 und/oder VLR 37, einem GGSN (Gateway GPRS Support Node) 50 über ein GRX-Modul 51 (GRX: GPRS Roaming eXchange), einen Internet Service Provider 52 und ein Clearing System 53 für das Billing der beanspruchten Leistungen verbunden.

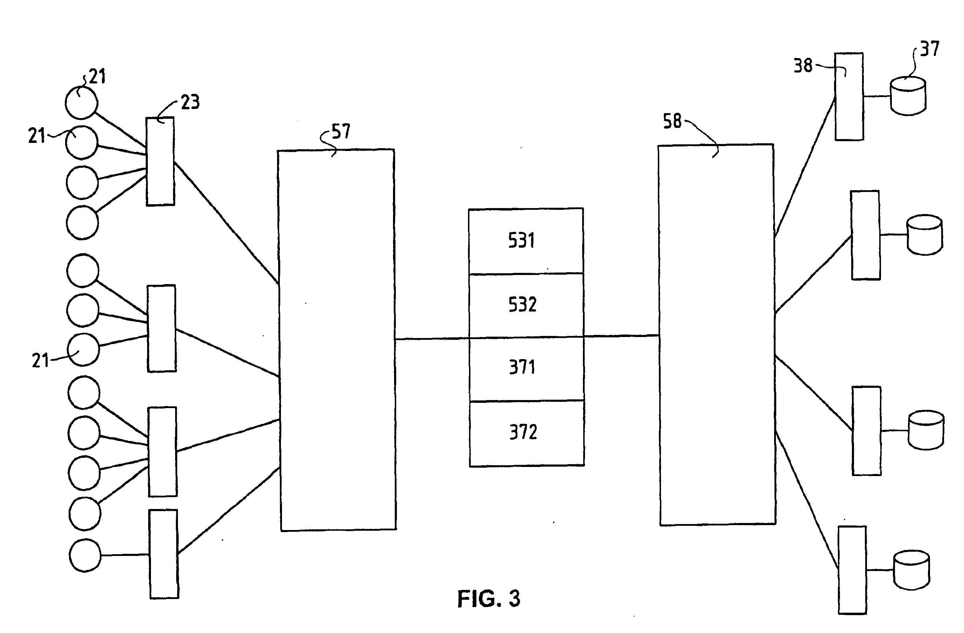

Figur 3 zeigt ein Blockdiagramm, welches schematisch ein erfindungsgemässes Verfahren und ein System für nahtloses Roaming in heterogenen WLANs illustriert, wobei die offene IP-Welt mittels dem erfindungsgemässen Verfahren und System über Schnittstellen der Authentifizierung 371, SS7 372, Service Autorisierung 531 und Billing 532 mit der restriktiveren GSM-Welt verbunden sind.

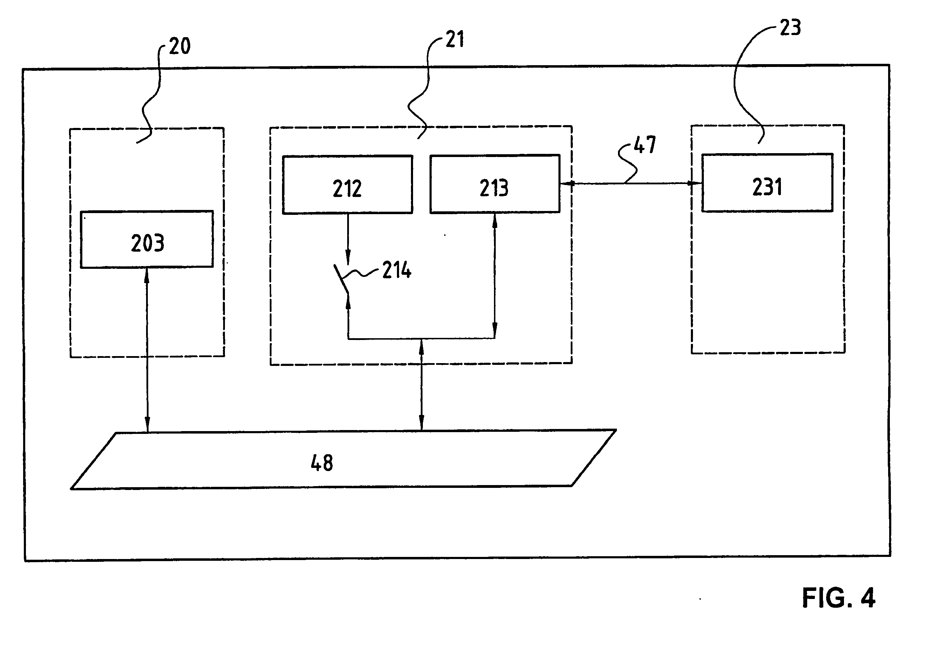

Figur 4 zeigt ein Blockdiagramm, welches schematisch den Aufbau eines IEEE 802.1x Port-basierenden Authentifikationsverfahrens illustriert, wobei der Supplicant oder Remote Access Client 20 über einen Authenticator oder Remote Access Server 21 bei einem Authentifikations-Server 23 authentifiziert wird, wobei das WLAN auf IEEE 802.11 basiert.

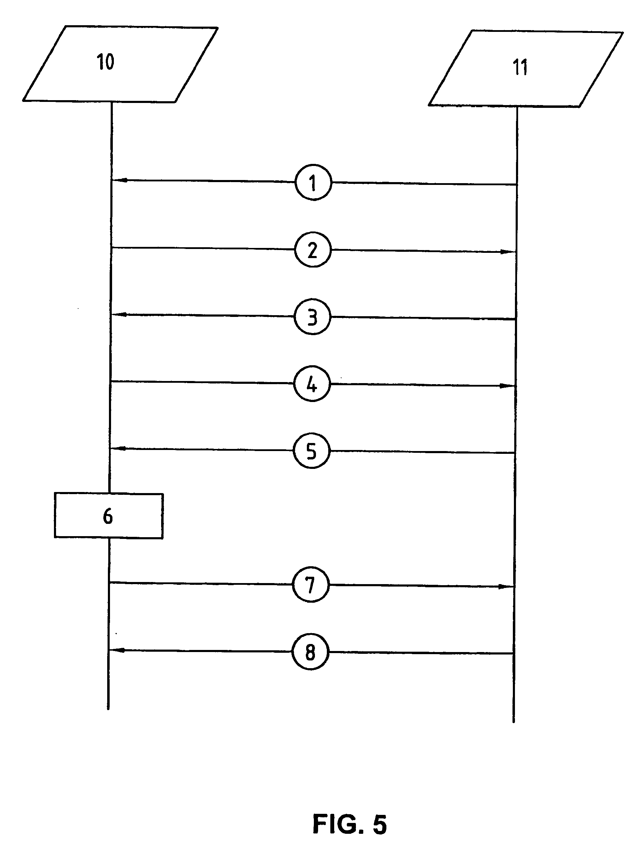

Figur 5 zeigt ein Blockdiagramm, welches schematisch eine mögliche Ausführungsvariante zur SIM-Authentifizierung mittels Extensible Authentification Protocol (EAP) illustriert, wobei ein GSM basiertes Challenge-Response Verfahren verwendet wird.

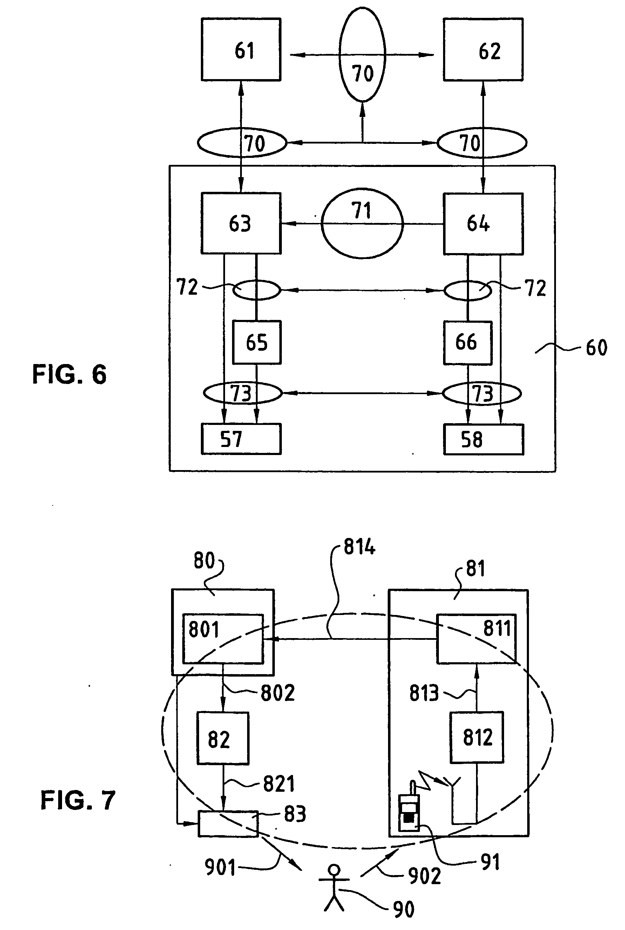

Figur 6 zeigt ein Blockdiagramm, welches schematisch den Aufbau einer Leistungserfassung und -verrechnung (Billing und Accounting) in der gemischten Umgebung von GSM-Netzwerken 63/64 und/oder Fixnetzwerken (PSTN) 61/62 gemäss dem Stand der Technik illustriert. Insbesondere zeigt Figur 6 die Rolle des TAP-Protokolls bei GSM-Billing und -Accounting zwischen unterschiedlichen Netzwerkdienstanbietern 61/62/63/64.
Figur 7 zeigt ein Blockdiagramm, welches schematisch den Aufbau einer Leistungserfassung und -verrechnung (Billing und Accounting) zwischen GSM-Heimnetzdienstanbieter 80 und GSM-Fremdnetzdienstanbieter 81 gemäss dem Stand der Technik unter Verwendung des TAP-Protokolls.

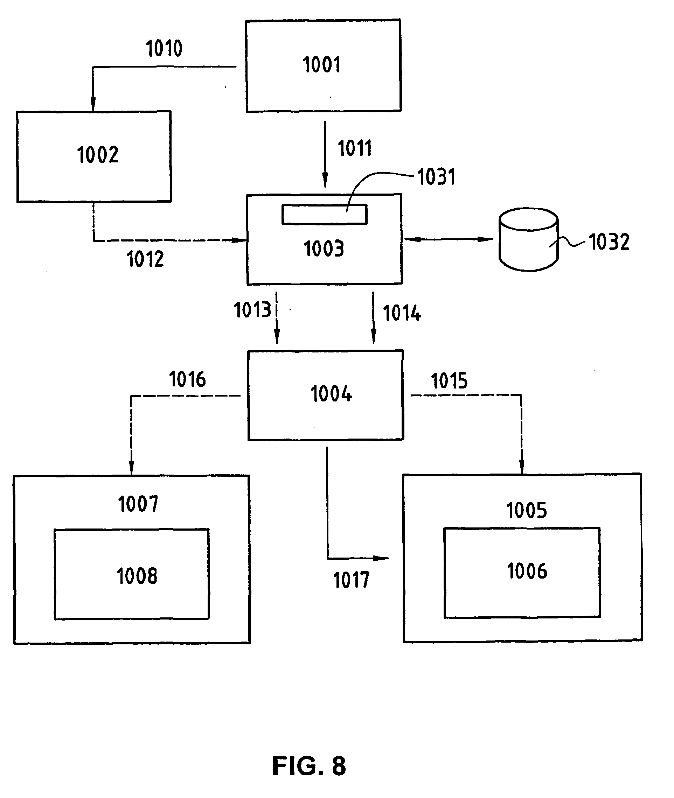

Figur 8 zeigt ein Blockdiagramm, welches schematisch ein erfindungsgemässes Verfahren und ein System zur Leistungserfassung und -verrechnung bei Roaming eines mobilen IP-Node 20 in heterogenen WLANS illustriert. Dabei werden erste Call Detail Records von einem Access Server 23/1001 auf ein Billing-Modul 1003 und zweite Call Detail Records vom Access Server auf ein Proxy-Modul 1002 übertragen. Mittels eines Clearing-Moduls 1004 wird die beanspruchte Leistung bei einem Anbieter 1008 eines Festnetzes 1007 verrechnet 1016 und/oder die TAP-Files 1017 zur Verrechnung an einen GSM 1005 Dienstanbieter 1006 übermittelt.

Figur 1 illustriert eine Architektur, die zur Realisierung der Authentifikation der Erfindung verwendet werden kann. Figur 1 zeigt ein Blockdiagramm, welches schematisch ein erfindungsgemässes Verfahren und ein System zur Authentifizierung eines Benutzers bei Roaming in heterogenen WLANs illustriert. In der Figur 1 bezieht sich das Bezugszeichen 20 auf einen mobile IP-Node, welcher über die notwendige Infrastruktur, einschliesslich Hardware- und Softwarekomponenten verfügt, um ein beschriebenes erfindungsgemässes Verfahren und/oder System zu realisieren. Unter mobile Nodes 20 sind u.a. alle möglichen sog. Customer Premise Equipment (CPE) zu verstehen, die zur Benutzung an verschiedenen Netzwerkstandorten und/oder verschiedenen Netzwerken vorgesehen sind. Diese umfassen beispielsweise sämtlich IP-fähigen Geräte wie z.B. PDAs, Mobilfunktelefone und Laptops. Die mobilen CPEs oder Nodes 20 besitzen ein oder mehrere verschiedene physikalische Netzwerkschnittstellen, die auch mehrere unterschiedliche Netzwerkstandards unterstützen können. Die physikalischen Netzwerkschnittstellen des mobilen Nodes können z.B. Schnittstellen zu WLAN (Wireless Local Area Network), Bluetooth, GSM (Global System for Mobile Communication), GPRS (Generalized Packet Radio Service), USSD (Unstructured Supplementary Services Data), UMTS (Universal Mobile Telecommunications System) und/oder Ethernet oder einem anderen Wired LAN (Local Area Network) etc. umfassen. Die Referenznummer 48 steht dementsprechend für die verschiedenen heterogenen Netzwerke, wie z.B. ein Bluetooth-Netzwerk, z.B. für Installationen in überdachten Örtlichkeiten, ein Mobilfunknetz mit GSM und/oder UMTS etc., ein Wireless LAN z.B. basierend auf IEEE wireless 802.1x, aber auch einem Wired LAN, d.h. einem lokalen Festnetz, insbesondere auch dem PSTN (Public Switched Telephone Network) etc.. Prinzipiell ist zu sagen, dass das erfindungsgemässe Verfahren und/oder System nicht an einen spezifischen Netzwerkstandart gebunden ist, sofern die erfindungsgemässen Merkmale vorhanden sind, sondern können mit einem beliebigen LAN realisiert werden. Die Schnittstellen 202 des mobilen IP-Nodes können nicht nur packet-switched Schnittstellen, wie sie von Netzwerkprotokollen wie z.B. Ethernet oder Tokenring direkt benutzt werden, sondern auch circuit-switched Schnittstellen, die mittels Protokollen wie z.B. PPP (Point to Point Protocol), SLIP (Serial Line Internet Protocol) oder GPRS (Generalized Packet Radio Service) benutzt werden können, d.h. welche Schnittstellen z.B. keine Netzwerkadresse wie eine MAC- oder eine DLC-Adresse besitzen. Wie teilweise erwähnt, kann die Kommunikation über das LAN, beispielsweise mittels speziellen Kurzmeldungen, z.B. SMS (Short Message Services), EMS (Enhanced Message Services), über einen Signalisierungskanal, wie z.B. USSD (Unstructured Supplementary Services Data) oder andere Techniken, wie MExE (Mobile Execution Environment), GPRS (Generalized Packet Radio Service), WAP (Wireless Application Protocol) oder UMTS (Universal Mobile Telecommunications System) oder über IEEE wireless 802.1x oder einen anderen Nutzkanal erfolgen. Der mobile IP-Node 20 kann ein Mobile IP-Modul und/oder ein IPsec-Modul umfassen. Die Hauptaufgabe des Mobile IP besteht darin, den mobilen IP-Node 20 im IP-Netzwerk zu authentifizieren und die IP-Pakete, die den mobilen Node 20 als Zieladresse haben, entsprechend umzuleiten. Zu den weiteren Mobile IP Spezifikationen, siehe z.B. auch IEFT (Internet Engineering Task Force) RFC 2002, IEEE Comm. Vol. 35 No. 5 1997 etc. Mobile IP unterstützt insbesondere IPv6 und IPv4. Die Mobile IP Fähigkeiten können vorzugsweise mit den Sicherheitsmechanismen eines IPsec (IP security protocol)-Moduls kombiniert werden, um ein sicheres mobiles Datenmanagement im öffentlichen Internet zu garantieren. IPsec (IP security protocol) erzeugt paketweise oder socketweise Authentifikations-/Vertraulichkeitsmechanismen zwischen Netzwerkknoten, die beide IPsec benutzen. Eine der Flexibilitäten von IPsec liegt insbesondere darin, dass es sich paketweise aber auch für einzelne Sockets konfigurieren lässt. IPsec unterstützt IPvx, insbesondere lPv6 und IPv4. Für detailliertere IPsec-Spezifikationen siehe z.B. Pete Loshin: IP Security Architecture; Morgan Kaufmann Publishers; 11/1999 oder A Technical Guide to IPsec; James S et al.; CRC Press, LLC; 12/2000 etc. Obwohl IPsec bei diesem Ausführungsbeispiel als Beispiel für die Verwendung von Sicherheitsprotokollen auf IP-Niveau beschrieben worden ist, sind alle möglichen anderen Sicherheitsprotokolle oder -mechanismen oder gar das Weglassen von Sicherheitsprotokollen erfindungsgemäss vorstellbar.

Weiter ist der mobile IP-Node 20 über eine kontaktbehaftete Schnittstelle mit einer SIM-Karte 201 (SIM: Subscriber Identity Module) verbunden, auf welcher eine IMSI (International Mobile Subscriber Identifier) eines Benutzers von GSM-Netzwerken abgespeichert ist. Zur Authentifizierung fordert der mobile IP-Node 20 über eine drahtlose Schnittstelle 202 innerhalb einer Basic Service Area eines WLANs bei einem Access Point 21/22 Zugriff auf das WLAN. Wie bereits beschrieben, können die verschiedenen WLANs unterschiedlicher Hot Spots heterogene Netzwerkstandards und -protokolle umfassen, wie z.B. WLAN basierend auf dem IEEE wireless 802.1x, Bluetooth etc.. Die Basic Service Area des WLAN umfasst ein oder mehrere einem Access Server 23 zugeordnete Access Points 21/22. Der mobile IP-Node 20 übermittelt auf einen Request des Access Servers 23 eine auf der SIM-Karte 201 des mobilen IP-Nodes 20 gespeicherte IMSI an den Access Server 23. Die IMSI des mobilen IP-Nodes 20 wird mittels eines SIM-RADIUS-Moduls 30 gespeichert. Basierend auf der IMSI wird mittels von in einer SIM-Benutzerdatenbank 34 abgespeicherten Informationen der logische IP-Datenkanal des WLAN zu entsprechenden GSM-Daten für Signal- und Datenkanäle eines GSM-Netzwerkes benutzerspezifisch ergänzt. Das GSM System umfasst Datenkanäle, die sog. Traffic Channels, und Kontrollsignalkanäle, sog. Signaling Channels. Die Traffic Channeles (z.B. TCH/FS, TCH/HS, TCH/F9,6/4.8/2.4 und TCH/H4.8/2.4 etc.) sind für Benutzerdaten reserviert, während die Signaling Channels (z.B. CCCH: Common Control Channels, RACH: Random Access Channels, DCCH: Dedicated Control Channels, CBCH: Cell Broadcast Channel etc.) für Netzwerk-Management, Kontrollfunktionen etc. verwendet werden. Die logischen Kanäle sind über die Schnittstelle nicht alle gleichzeitig benutzbar, sondern anhand der GSM-Spezifikationen nur in bestimmten Kombinationen. Mittels eines SIM-Gateway-Moduls 32 werden zur Durchführung der Authentifizierung des IP-Nodes basierend auf den GSM-Daten die notwendigen SS7/MAP-Funktionen (SS7: Signaling System 7 der International Telecommunication Union (ITU) / MAP: Mobile Application Part des GSM-Standarts) generiert, wobei das SIM-RADIUS-Modul 30 mittels SIM-Benutzerdatenbank 34 und SIM-Gateway-Moduls 32 die Authentifizierung des mobilen IP-Nodes basierend auf der IMSI der SIM-Karte 201 des mobilen Nodes 20 bei einem HLR 37 (Home Location Register) und/oder VLR 37 (Visitor Location Register) eines GSM-Netzwerkes durchführt. Das SS7 Telekommunikationsprotokoll der ITU ist charakterisiert durch sog. Hochgeschwindigkeits-Circuit-Switching mit Out-Of-Band Signalisierung, wobei Service Switching Points (SSPs), Signal Transfer Points (STPs), und Service Control Points (SCPs) (häufig zusammen auch als SS7-Nodes bezeichnet) verwendet werden. Out-Of-Band Signalisierung ist eine Signalübertragung, für welche nicht der selbe Datenkanale wie zur Daten- oder Voiceübertragung verwendet wird. Dazu wird ein separater digitaler Kanal (Signalkanal) erzeugt, über welchen Signale zwischen zwei Netzwerkkomponenten typischerweise bei 56 oder 64 Kilobit pro Sekunde übertragen werden können. Die SS7 Architektur ist derart konzipiert, dass jede Netzwerkkomponente (Node) mit jedem anderen SS7-fähigen Node Signale austauschen kann und nicht bloss Switches, welche direkt miteinander verbunden sind.

Wie in Figur 5 illustriert, kann die Authentifizierung des mobilen IP-Nodes 20 z.B. mittels Extensible Authentication Protocol durchgeführt werden. Für das EAP-basierende Verfahren zur Authentifizierung eines Benutzers und zur Vergabe von Sessions Keys an den Benutzer mittels des GSM Subscriber Identity Modul (SIM) kann z.B. folgendes Challenge-Response Verfahren verwendet werden. Dem Authentifikationsalgorithmus der SIM-Karte wird als Challenge (Frage) eine 128-bit Zufallszahl (RAND) gegeben. Auf der SIM-Karte läuft dann ein für den jeweiligen Operator spezifischer, vertraulicher Algorithmus, der als Input die Zufallszahl RAND und einen geheimen, auf der SIM-Karte gespeicherten Schlüssel Ki erhält und daraus eine 32-bit Antwort (SRES) und einen 64-bit Schlüssel Kc generiert. Kc dient zur Verschlüsselung des Datentransfers über drahtlose Schnittstellen (GSM Technical Specification GSM 03.20 (ETS 300 534): "Digital cellular telecommunication system (Phase 2); Security related network functions", European Telecommunications Standards Institute, August 1997). Zur Authentifizierung werden mehrere RAND Challenge zum Generieren von mehreren 64-bit Kc Schlüsseln verwendet. Diese Kc-Schlüssel werden zu einem längeren Session Key kombiniert. Figur 4 zeigt schematisch den Aufbau zwischen dem mobilen IP-Node 20, dem Access Point 21 und dem Access Server 23 in einem IEEE 802.1x Port-basierenden Authentifikationsverfahren, wobei der mobile IP-Node 20 (Remote Access Client / Supplicant) über den Access Point 21 (Authenticator) beim Access Server 23 (Authentifikations-Server) authentifiziert wird. Das WLAN basiert in diesem Ausführungsbeispiel auf IEEE 802.11. Um die GSM-Authentifikation durchzuführen, fungiert das SIM-Gateway-Modul 32 als Gateway zwischen Internet Authentification Service (IAS) Server Netzwerk und der GSM Authentifikationsinfrastruktur, d.h. dem Access Point 21/22 bzw. dem Access Server 23 und dem HLR 37 bzw. dem VLR 37. Zu Beginn der EAP/SIM Authentifizierung verlangt der Access Server 23 mit einem ersten EAP-Request 1 durch den Access Point 21/22 vom mobilen IP-Node 20 u.a. die International Mobile Subscriber Identity (IMSI) des Benutzers. Diese wird vom mobilen IP-Node mittels EAP-Response 2 an den Access Point 21/22 übermittelt. Mit der IMSI erhält der Access Server 23 auf eine Triplet-Anfrage vom entsprechenden HLR 37 bzw. VLR 37 bezeichnet, n GSM Triplets. Basierend auf den Triplets kann der Access Server 23 ein Message Authentification Code für n*RAND und eine Lebensdauer für den Schlüssel (zusammen MAC_RAND) sowie einen Session Schlüssel erhalten. In einem 3. EAP-Schritt 3 (Figur 5) schickt der Access Server 23 dann z.B. einen EAP-Request vom Typ 18 (SIM) an den mobilen IP-Node 20 und erhält die entsprechende EAP-Response 4. EAP-Datenpakete vom Typ SIM haben zusätzlich ein spezielles Subtyp-Feld. Der erste EAP-Request/SIM ist vom Untertype 1 (Start). Dieses Paket enthält die Liste der EAP/SIM Protokoll Versions-Nummern, die durch den Access Server 23 unterstützt werden. Der EAP-Response/SIM (Start) 4 (Figur 5) des mobilen IP-Nodes 20 enthält die vom mobilen IP-Node 20 ausgewählte Versionsnummer. Der mobile IP-Node 20 muss eine der im EAP-Request angegebenen Versionsnummern auswählen. Der EAP-Response/SIM (Start) des mobilen IP-Nodes 20 enthält ebenfalls einen Lebensdauervorschlag für den Schlüssel (Key) und eine Zufallsnummer NONCE_MT, die durch den mobilen IP-Node generiert wurde. Alle folgenden EAP-Requests enthalten alle die gleiche Version wie das EAP-Response/SIM (Start) Datenpaket des mobilen IP-Nodes 20. Wie erwähnt, besitzt diese Ausführungsvariante, um die GSM-Authentifikation durchzuführen, ein SIM-Gateway-Modul 32, das als Gateway zwischen dem Access Server 23 und dem HLR 37 bzw. dem VLR 37 fungiert. Nach Erhalt der EAP-Response/SIM erhält der Access Server 23 ein n GSM Triplet vom HLR/VLR 37 des GSM-Netzwerkes. Aus den Triplets berechnet der Access Server 23 MAC_RAND und den Session Key K. Die Berechnung der kryptographischen Werte des SIM-generierten Session Key K und des Message Authentification Codes MAC-Rand und MAC_SRES kann beispielsweise dem Dokument "HMAC: Keyed-Hashing for Message Authentification" von H. Krawczyk, M. Bellar und R. Canetti (RFC2104, Feb. 1997) entnommen werden. Der nächste EAP-Request 5 (Figur 5) des Access Servers 23 ist vom Typ SIM und Subtyp Challenge. Der Request 5 enthält die RAND Challenges, die vom Access Server 23 beschlossene Lebensdauer des Schlüssels, ein Message Authentication Code für die Challenges und die Lebenszeit (MAC_RAND). Nach Erhalt des EAP-Request/SIM (Challenge) 5 läuft der GSM-Authentifikationsalgorithmus 6 auf der SIM-Karte und berechnet eine Kopie von MAC_RAND. Der mobile IP-Node 20 kontrolliert, dass der berechnete Wert von MAC_RAND gleich dem erhaltenen Wert von MAC_RAND ist. Ergibt sich keine Übereinstimmung der beiden Werte, bricht der mobile IP-Node 20 das Authentifikationsverfahren ab und schickt keine von der SIM-Karte berechneten Authentifikationswerte an das Netzwerk. Da der Wert RAND zusammen mit dem Message Authentifikations-Code MAC_RAND erhalten wird, kann der mobile IP-Node 20 sicherstellen, dass RAND neu ist und vom GSM-Netzwerk generiert wurde. Sind alle Überprüfungen richtig gewesen, schickt der mobile IP-Node 20 ein EAP-Response/SIM (Challenge) 7, der als Antwort MAC_SRES des mobilen IP-Nodes 20 enthält. Der Access Server 23 überprüft, dass MAC_RES korrekt ist und schickt schliesslich ein EAP-Success Datenpaket 8 (Figur 5), welches dem mobilen IP-Node 20 anzeigt, dass die Authentifizierung erfolgreich war. Der Access Server 23 kann zusätzlich den erhaltenen Session Key mit der Authentifizierungs-Meldung (EAP-Success) an den Access Point 21/22 schicken. Bei erfolgreicher Authentifizierung wird ein Location Update beim HLR 37 und/oder VLR 37 durchgeführt und der mobile IP-Node 20 erhält in einer Customer Database des Access Servers einen entsprechenden Eintrag, wobei das WLAN zur Benutzung durch den mobilen IP-Node 20 freigegeben wird. Wie erwähnt, hat dies u.a. den Vorteil, dass ein nahtloses Roaming zwischen unterschiedlichen und heterogenen WLANs möglich wird. Durch das Verbinden der WLAN-Technologie, insbesondere der IP-Netzwerke, mit der GSM-Technologie wird das Roaming des Benutzers möglich, ohne dass er sich um Anmeldung, Billing, Service Autorisation etc. bei den verschiedenen WLAN-Dienstanbietern bemühen müsste, d.h. dass der Benutzer den gleichen Komfort geniesst, wie er es von der Mobilfunktechnologie, wie z.B. GSM, gewohnt ist. Gleichzeitig ist es auf eine völlig neue Art möglich, die Vorteile der offenen IP-Welt (Zugang zum weltweiten Internet etc.) mit den Vorteilen (Sicherheit, Billing, Service Autorisation etc.) zu verbinden. Die Erfindung erlaubt auch ein Verfahren für ein Roaming in WLANs zu erzeugen, ohne dass bei jedem Access Server ein entsprechendes Modul eingebaut werden müsste. Im Gegenteil kann die Infrastruktur (WLAN/GSM) durch die Verwendung von RADIUS unverändert übernommen werden.

Figur 2 und Figur 3 zeigen in einem Blockdiagramm schematisch ein erfindungsgemässes Verfahren und System, wie über die Schnittstellen der Authentifizierung 371, SS7 372, Service Autorisierung 531 und Billing 532 die offene IP-Welt 57 mit der restriktiveren GSM-Welt 58 verbunden sind. Die Referenznummer 38 gibt dabei unterschiedliche Mobilfunknetzdienstanbieter mit zugeordneten HLR/VLR 37 an. Als Ausführungsvariante ist es vorstellbar, dass der Datenstrom des mobilen IP-Nodes 20 beim Zugriff auf das WLAN vom Access Point 21 /22 über den Mobilfunknetzdienstanbieter 38 geleitet wird. Dies erlaubt dem Mobilfunknetzdienstanbieter 38 basierend auf der Authentifizierung mittels der IMSI benutzerspezifische Service Autorisierung zur Benutzung unterschiedlicher Dienste zu erteilen und/oder benutzerspezifisches Billing der beanspruchten Leistung durchzuführen. Die Serviceautorisierung könnte jedoch z.B. mittels eines Moduls 214 direkt beim Access Point 21/22 vorgenommen werden. Bei Figur 2 sind weiter mobile IP-Nodes 20 über eine kontaktbehaftete Schnittstelle mit einer SIM-Karte 201 verbunden und greifen mittels einer drahtlose Verbindung 48 auf ein WLAN zu. Das WLAN ist über einen Access Server 23 mit einem GSM Mobilfunknetz, insbesondere einem HLR 37 und/oder VLR 37, einem GGSN (Gateway GPRS Support Node) 50 über ein GRX-Modul 51 (GRX: GPRS Roaming eXchange), einen Internet Service Provider 52 und einem Clearing System 53 für das Billing der beanspruchten Leistungen verbunden.

Es ist zu erwähnen, dass in einem erweiterten Ausführungsbeispiel zum oben genannten Ausführungsbeispiel bei der Authentifizierung die SIM-Benutzerdatenbank 34 mit einem Sync-Modul 35 und einer Sync-Datenbank 36 zum Verändern oder Löschen von bestehenden Benutzerdatensätzen oder zum Einfügen neuer Benutzerdatensätze verbunden ist, wobei der Abgleich der Datenbanken 34/36 periodisch durchgeführt wird und/oder durch Veränderungen der Sync-Datenbank 36 und/oder durch Ausfall der SIM-Benutzerdatenbank 34 ausgelöst wird. Das Sync-Modul 35 und die Sync-Datenbank 36 können wie die übrigen erfindu ngsgemässen Komponenten hardware- oder softwaremässig als eigenständige Netzwerkkomponenten, z.B. als eigenständiger IP-Node und/oder GSM-Komponente oder einer anderen Systemkomponente zugeordnet und/oder in eine andere Systemkomponente integriert realisiert sein. Mit dieser Ausführungsvariante können die Mobilfunknetzbetreiber 38 zum Verändern oder Löschen von bestehenden Benutzerdatensätzen oder zum Einfügen neuer Benutzerdatensätze in gleicher Weise verfahren, wie bisher mit ihren Benutzerdatenbanken, dass heisst, ohne dass sie zusätzliche Systeme kaufen oder warten müssten.

Figur 6 zeigt ein Blockdiagramm, welches schematisch den Aufbau einer Leistungserfassung und -verrechnung (Billing und Accounting) in der gemischten Umgebung von GSM-Netzwerken 63/64 und/oder Fixnetzwerken (PSTN) 61/62 gemäss dem Stand der Technik illustriert. Hingegen zeigt Figur 7 in einem Blockdiagramm schematisch den Aufbau einer Leistungserfassung und -verrechnung (Billing und Accounting) zwischen GSM-Heimnetzdienstanbieter 80 und GSM-Fremdnetzdienstanbieter 81 gemäss dem Stand der Technik ebenfalls unter Verwendung des TAP-Protokolls. Für das Billing und Accounting der von mobilen Einheiten beanspruchten Leistung in GSM-Netzwerken ist im Stand der Technik das sog. TAP-Protokoll (TAP: Transferred Account Procedure) der Transferred Account Data Interchange Group (TADIG) der GSM-Vereinigung bekannt. Bei Figur 6 repräsentieren die Referenznummern 61 und 62 Festnetzdienstanbieter (PSTN/ISDN). Die Referenznummer 70 ist das normale Billing und Accounting von Festnetzanrufen unter Festnetzdienstanbietern des Standes der Technik. Die Referenznummer 71 ist das Billing und Accounting zwischen unterschiedlichen GSM Mobilfunknetzdienstanbietern 63/64 mittels TAP Protokoll. Die Referenznummer 72 ist das erwähnte Wholesale Billing, während die Referenznummer 73 entsprechend Retail Billing repräsentiert. Die Referenznummern 65/66 stehen für GSM Service Provider. Die Benutzer 57/58 werden folglich entweder mittels Wholesale Billing 72 über einen Service Provider 65/66 fakturiert oder direkt mittels Retail Billing 72 durch den GSM Mobilfunknetzdienstanbieter 63/64. Figur 7 zeigt einen möglichen Datenaustausch zwischen zwei Netzwerkbetreibern 80/81 basierend auf TAP. Details 813 eines Anrufes durch einen Benutzer 90, der sich in einem fremden Netzwerk (VPLMN: Visited Public Landbased Mobile Network) 81/902 befindet, wird in einem Mobile Switching Center (MSC) 812 des Netzwerkes 81 registriert. Jeder Anruf erzeugt so ein oder mehrere Anrufrekords 813. Der GSM-Standart für diese Rekords ist in GSM 12.05 definiert, obwohl viele Anbieter ihre eigenen Formate benutzen. Die Anrufrekords 813 des MSC 812 werden zu einem Billing-System 811 des VPLMN 81 zur Verrechnung übertragen. Diese Anrufrekords 813 werden dann in TAP-Format 814 konvertiert und dem entsprechenden Benutzer 90 zugeordnet. Spätestens innerhalb von 36 Stunden werden die TAP-Rekords 814 an den entsprechenden Mobilfunknetzdienstanbieter 801 des Heimnetzwerkes 80 versandt. Die TAP-Files 814 enthalten zusätzlich Informationen bezüglich des Anbieter-Leistungstarifs (IOT: Inter Operator Tariff) und alle weiteren bilateralen Vereinbarungen und Vergünstigungschemen. Die TAP-Rekords werden direkt oder üblicher über eine Verrechnungsstelle, wie z.B. ein Clearinghaus, geschickt. Erhält der Heimnetzwerkbetreiber (HPMN: Home Public Mobile Network) 801 ein TAP-Rekord 814 vom VPLMN 811 wird dieses in ein entsprechendes internes Format 802 konvertiert und zusammen mit den normalen Anrufrekords des Benutzers 90, welche er im Heimnetzwerk 80 erzeugt, verrechnet. Bei Wholesale Billing, bei dem ein Service Provider 82 die anfallenden Kosten dem Benutzer 90 verrechnet 901, leitet das HPMN 801 die Rekords 802 weiter an den Service Provider 82, der die Anrufe insbesondere auch gemäss eigenen Tarifen neu verrechnen kann und die Abrechnung 83 mit z.B. Anrufdetails für den Benutzer 90 erzeugt 821. Bei diesem Verfahren wird der Benutzer 90 folglich stets über den HPLMN 801 verrechnet 901.

Figur 8 zeigt ein erfindungsgemässes Verfahren und System zur Leistungserfassung und -verrechnung bei Roaming eines mobilen IP-Nodes 20 in heterogenen WLANS der mobile IP-Node 20 über eine drahtlose Schnittstelle innerhalb einer Basic Service Area eines WLANs auf einen Access Point 21/22 eines WLAN zugreift. Die Basic Service Area des WLAN umfasst ein oder mehrere einem Access Server 23/1001 zugeordnete Access Points 21/22. Über den entsprechenden Access Point 21/22 übermittelt der mobile IP-Node 20 auf einen Request des Access Servers 23/1001 eine auf einer SIM-Karte 201 des mobilen IP-Nodes 20 gespeicherte IMSI an den Access Server 23/1001. Die IMSI des IP-Nodes 20 wird in einer Datenbank 31 eines SIM-RADIUS-Moduls 30 gespeichert. Ein SIM-Radius-Modul 30 ergänzt benutzerspezifisch mittels einer SIM-Benutzerdatenbank 34 und einem SIM-Gateway-Modul 32 den logischen IP-Datenkanal des WLAN zu entsprechenden GSM-Daten für Signal- und Datenkanäle eines GSM-Netzwerkes. Über die ergänzten Signal- und Datenkanäle wird eine Authentifizierung und/oder Service Autorisierung des mobilen IP-Nodes 20 basierend auf der IMSI der SIM-Karte 201 des mobilen Nodes 20 bei einem HLR 37 und/oder VLR 37 eines GSM-Netzwerkes, wie in Figur 1, 2 und 3 beschrieben, durchgeführt. Für das Billing und Accounting greift ein Billing-Modul 1003 mittels eines Billing-Gateway-Interfaces 1031 auf den Access Server 23/1001 zu. Über das Billing-Gateway-Interfaces 1031 werden erste Call Detail Records des mobilen IP-Nodes 20 vom Access Server 23/1001 auf das Billing-Modul 1003 übertragen 1011. Das Billing-Modul 1003 besitzt ein zugeordnetes software und/oder hardwaremässig realisiertes Modul, mittels welchem es CDR-Files über das Billing-Gateway-Interfaces 1031 vom Access Server 23/1001 holen kann und an das Billing-Modul 1003 und/oder das Proxy-Modul 1002 übermittelt. Der Download kann periodisch, wie z.B. täglich, geschehen und/oder auf Anfragen eines Access Servers 23/1001 und/oder des Billing-Moduls 1003 und/oder des Proxy-Moduls 1002. Ein solches erstes Call Detail Record kann z.B. mit einem entsprechend definierten File Application Identifier im Billing-Modul 1003 bezeichnet werden. Ein erstes Call Detail Record kann z.B. SIM-basierende Authentifikationsinformation umfassen. Die SIM-basierende Authentifikationsinformation kann u.a. eine Hotspot-ID, eine File-Nummer für die Reihenfolge der erhaltenen Files sein sowie ein sog. Transfer Cut-off Timestamp (wie er z.B. in GSM PRD TD.57 definiert ist) umfassen. Um einen einfachen Zugriff auf einen Access Server zu erlauben, können die CDR z.B. in drei unterschiedlichen Directories auf einem Access Server abgespeichert sein. Z.B. ein Directory mit offenen Files, das heisst Files die noch verändert werden, ein Directory mit Files, die zwar geschlossen sind (d.h. nicht mehr verändert werden), aber als nicht zu senden markiert sind und schliesslich ein Directory mit Files, die geschlossen sind und zum Übermitteln bereit sind. Das Billing Gateway Interface 1031 umfasst eine zugeordnete Billing-Management-Datenbank 1032 mit dem Konfigurationsprofil jedes Access Servers 23/1001. D.h. das Billing-Modul 23/1001 kann das Kommunikationsprofil für einen gewünschten Access Server 23/1001 eines Hot Spots von der Billing-Management-Datenbank 1032 erhalten. Die Billing-Management-Datenbank 1032 enthält alle notwendigen Profile und Betriebskonfigurationen die für den Datenaustausch und den Betrieb mit den GSM-Dienstanbietern 1006, WLAN-Dienstanbietern und Hotspots benötigt werden. Die Billing-Management-Datenbank 1032 kann insbesondere z.B. IP-Adressen und/oder GSM-Identitifizierung der Benutzer und/oder Dienstanbieter umfassen. Basierend u.a. auf Informationen der Billing-Management-Datenbank 1032 werden u.a. die CDR (IP-Adressen etc.), TAP-Files (PMN Codes (Public Mobile Network TAP Identifier Code), IOTs), Fakturierungsanweisungen für die WLAN-Dienstanbieter (Betragshöhe etc.) und Hotspot Autorisierung für GSM Dienstanbieter (Signalisierung etc.) erstellt. Als Ausführungsvariante ist insbesondere ein automatisiertes Updateverfahren der Billing-Management-Datenbank mittels eines Signalisierungsgatewaymoduls vorstellbar. Ein solches Updateverfahren würde eine konsistente und aktuelle Authentifikation und Autorisierung der Billing-Moduls 1003 bei den unterschiedlichen Access Servern 1001 erlauben. Weiter werden zweite Call Detail Records des mobilen IP-Nodes 20 an ein Proxy-Modul 1002 übermittelt 1010, wobei das Proxy-Modul 1002 mindestens Identität des mobilen IP-Nodes 20 und/oder Zeitdauer und/oder Anbieter der beanspruchten Leistung erfasst und an das Billing-Modul 1003 weitergibt 1012. Der Download kann mittels des erwähnten software- und/oder hardwaremässig realisierten Moduls geschehen, welches CDR-Files über das Billing-Gateway-Interfaces 1031 vom Access Server 23/1001 holen kann und an das Billing-Modul 1003 und/oder das Proxy-Modul 1002 übermitteln kann. Der Download kann periodisch, wie z.B. täglich, geschehen und/oder auf Anfragen eines Access Servers 23/1001 und/oder des Proxy-Moduls 1002 und/oder des Billing-Moduls 1003. Die zweiten Call Detail Records können z.B. mindestens basierend auf der IP-Adresse des mobilen IP-Nodes und Identifikationen der Dienstanbieter, deren Leistung vom mobilen Node beansprucht wurde, erstellt sein. D.h. die ersten Call Detail Records des mobilen IP-Nodes, die vom Access Server zum Billing-Modul übermittelt werden, sind u.a. SIM-basierend erstellt, während die zweiten Call Detail Records, die vom Access Server zum Proxy-Modul übermittelt werden, IP-basierend wie z.B. auf RADIUS-Informationen erstellt sind. Informationen der zweiten CDR werden u.a. für das Billing und Clearing der Leitungen der Benutzer und der WLAN-Dienstanbieter benötigt. Das Billing-Modul 1003 erzeugt entsprechend der beanspruchten Leistung TAP-Files 1014 und übermittelt diese zusammen mit Fakturierungsanweisungen 1013 an ein Clearing-Modul 1004. D.h. die eingehenden IMSI-authentifizierten CDRs werden jeweils in TAP-Format konvertiert. Die TAP-Files können z.B. auch basierend auf Inter Operator Tariffs sowie Public Mobile Network TAP Identification Codes erstellt sein. In Kombination dazu oder als eigenständige Ausführungsvariante ist es z.B. ebenfalls vorstellbar, dass die Billing-Management-Datenbank Inter Operator Tariffs sowie Public Mobile Network TAP Identification Codes umfasst. Die Fakturierungsanweisungen 1013 umfassen mindestens benutzerspezifische und/oder dienstanbieterspezifische Verrechnungsdaten. Das Clearing-Modul 1004 kann die beanspruchte Leistung des Benutzers 1008 einem Anbieter 1008 eines Festnetzes 1007 verrechnen 1016 und/oder die TAP-Files 1017 zur Verrechnung an einen GSM 1005 Dienstanbieter 1006 übermittelt. Es ist zu erwähnen, dass alle erfindungsgemässen Module und/oder Netzwerkkomponenten sowohl hardwaremässig als auch softwaremässig realisiert sein können. Der Datenstrom des mobilen IP-Nodes 20 kann z.B. auch beim Zugriff auf das WLAN vom Access Point 21/22 über einen Mobilfunknetzdienstanbieter geleitet werden. Damit kann der Mobilfunknetzdienstanbieter vollständige Kontrolle über den Datenfluss des Benutzers erhalten. So kann er auch für die IP-Welt spezifisch Service Autorisationen vergeben, detailliertes Billing durchführen und Sicherheitsmechanismen einbauen. U.a. kann er damit die offene, schwierig zu kontrollierende IP-Welt mit beispielsweise dem Internet, mit den Vorteilen der GSM-Welt verbinden. Dies spielt gerade in neuerer Zeit z.B. bezüglich Haftungsfragen des Providers oder Dienstanbieters eine grosse Rolle.

## Patentansprüche

1. Computergestütztes Verfahren zur Leistungserfassung und -verrechnung bei Roaming eines mobilen IP-Node (20) in heterogenen WLANs, wobei der mobiler IP-Node (20) über eine drahtlose Schnittstelle innerhalb einer Basic Service Area eines WLANs auf einen Access Point (21/22) eines WLAN zugreift, wobei die Basic Service Area des WLAN ein oder mehrere einem Access Server (23/1001) zugeordnete Access Points (21/22) umfasst, bei welchem der mobile IP-Node (20) auf einen Request des Access Servers (23/1001) eine auf einer SIM-Karte (201) des mobilen IP-Nodes (20) gespeicherte IMSI an den Access Server (23/1001) übermittelt und die IMSI des IP-Nodes (20) in einer Datenbank (31) eines SIM-RADIUS-Moduls (30) gespeichert wird, **dadurch gekennzeichnet,**
**dass** basierend auf der IMSI mittels von in einer SIM-Benutzerdatenbank (34) abgespeicherten Informationen der logische IP-Datenkanal des WLAN zu entsprechenden GSM-Daten für Signal- und Datenkanäle eines GSM-Netzwerkes benutzerspezifisch ergänzt wird, wobei mittels eines SIM-Gateway-Moduls (32) zur Durchführung der Authentifizierung und Service-Autorisierung des IP-Nodes (20) basierend auf den GSM-Daten die notwendigen SS7/MAP-Funktionen generiert werden und wobei das SIM-RADIUS-Modul (30) mittels SIM-Benutzerdatenbank (34) und SIM-Gateway-Moduls (32) die Authentifizierung und Service-Autorisierung des mobilen IP-Nodes basierend auf der IMSI der SIM-Karte (201) des mobilen IP-Nodes (20) bei einem HLR (37) eines GSM-Netzwerkes durchführt,
**dass** bei erfolgreicher Authentifizierung ein Location Update beim HLR (37) durchgeführt wird und der mobile IP-Node (20) in einer Customer Database des Access Servers (23) einen entsprechenden Eintrag erhält, wobei das WLAN zur Benutzung durch den mobilen IP-Node (20) freigegeben wird,
**dass** ein Billing-Modul (1003) mittels eines Billing-Gateway-Interfaces (1031) auf den Access Server (23/1001) zugreift, wobei erste Call Detail Records des mobilen IP-Nodes (20) vom Access Server (23/1001) auf das Billing-Modul (1003) übertragen werden (1011) und wobei das Billing Gateway Interface (1031) eine zugeordnete Billing-Management-Datenbank (1032) mit dem Konfigurationsprofil jedes Access Servers (23/1001) umfasst,
**dass** zweite Call Detail Records des mobilen IP-Nodes (20) an ein Proxy-Modul (1002) übermittelt werden (1010), welches Proxy-Modul (1002) mindestens Identität des mobilen IP-Nodes (20) und Zeitdauer und Anbieter der beanspruchten Leistung erfasst und an das Billing-Modul (1003) weitergibt (1012), und
**dass** das Billing-Modul (1003) entsprechend der beanspruchten Leistung basierend auf den Daten des Proxy-Modul (1002) und den ersten Call Detail Records (1011) TA P-Files (1014) erzeugt und diese zusammen mit Fakturierungsanweisungen (1013) an ein Clearing-Modul (1004) übermittelt, wobei die Fakturierungsanweisungen (1013) mindestens benutzerspezifische und dienstanbieterspezifische Verrechnungsdaten umfassen, und wobei das Clearing-Modul (1004) die beanspruchte Leistung des Benutzers (1008) einem Anbieter (1008) eines Festnetzes (1007) verrechnet (1016) und/oder die TAP-Files (1017) zur Verrechnung an einen GSM (1005) Dienstanbieter (1006) übermittelt.

2. Computergestütztes Verfahren nach Anspruch 1, **dadurch gekennzeichnet, dass** ein erstes Call Detail Record mindestens basierend auf der IP-Adresse des mobilen IP-Nodes (20) und Identifikationen der Dienstanbieter, deren Leistung vom mobilen Node beansprucht wurde, erstellt wird.

3. Computergestütztes Verfahren nach einem der Ansprüche 1 oder 2, **dadurch gekennzeichnet, dass** der Datenstrom des mobilen IP-Nodes (20) beim Zugriff auf das WLAN vom Access Point (21/22) über einen Mobilfunknetzdienstanbieter geleitet wird.

4. Computergestütztes Verfahren nach einem der Ansprüche 1 bis 3, **dadurch gekennzeichnet, dass** die TAP-Files (1014) mindestens basierend auf Inter Operator Tariffs sowie Public Mobile Network TAP Idenfification Codes erstellt werden.

5. Computergestütztes Verfahren nach einem der Ansprüche 1 bis 4, **dadurch gekennzeichnet, dass** die Billing-Management-Datenbank (1032) IP-Adressen und/oder GSM-Identitifizierung der Benutzer und/oder Dienstanbieter umfasst.

6. Computergestütztes Verfahren nach einem der Ansprüche 1 bis 5, **dadurch gekennzeichnet, dass** die Billing-Management-Datenbank (1032) Inter Operator Tariffs sowie Public Mobile Network TAP Identification Codes umfasst.

7. Computergestütztes Verfahren nach einem der Ansprüche 1 bis 6, **dadurch gekennzeichnet, dass** die zweiten SIM-basierenden Call Detail Records des mobilen IP-Nodes (20) vom Access Server (23/1001) zum Billing-Modul (1003) und die ersten IP-basierenden Call Detail Records vom Access Server (23/1001) zum Proxy-Modul (1002) übermittelt werden (1010/1011).

8. System zur Leistungserfassung und -verrechnung beim Roaming eines mobilen IP-Nodes (20) in heterogenen WLANs, welches System mindestens ein WLAN mit jeweils einer Basic Service Area umfasst, welche Basic Service Area eines WLANs einen oder mehrere einem Access Server (23/1001) zugeordnete Access Points (21/22) umfasst, welche Access Points (21/22) eine drahtlose Schnittstelle (211) zum Kommunizieren mit mobilen IP-Nodes (20) umfassen und welche mobilen IP-Nodes (20) eine SIM-Karte (201) zum Speichern einer IMSI umfassen, **dadurch gekennzeichnet,**
**dass** der Access Server (23/1001) ein SIM-Radius-Modul (30) eine SIM-Benutzerdatenbank (34) und ein SIM-Gateway-Modul (32) zur benutzerspezifischen Ergänzung des logischen IP-Datenkanal des WLAN zu entsprechenden GSM-Daten für Signal- und Datenkanäle eines GSM-Netzwerkes umfasst, wobei zur Durchführung der Authentifizierung und Service-Autorisierung des IP-Nodes (20) mittels eines SIM-Gateway-Moduls (32) die notwendigen SS7/MAP-Funktionen generierbar sind und wobei die Authentifizierung und Service Autorisierung des mobilen IP-Nodes (20) mittels des SIM-RADIUS-Moduls (30), der SIM-Benutzerdatenbank (34) und des SIM-Gateway-Moduls (32) basierend auf der IMSI der SIM-Karte (201) des mobilen Nodes (20) bei einem HLR (37) eines GSM-Netzwerkes durchführbar ist,
**dass** bei erfolgreicher Authentifizierung ein Location Update beim HLR (37) durchführbar ist und der Access Servers (23) eine Customer Database umfasst zur entsprechenden Eintragung des mobile IP-Node (20) bei erfolgreicher Authentifizierung, wobei das WLAN zur Benutzung durch den mobilen IP-Node (20) freigebbar ist,
**dass** der Access Server (23/1001) ein Billing-Modul (1003) mit einem Billing Gateway Interfaces (1031) für den Zugriff auf Access Server (23/1001) umfasst, wobei erste Call Detail Records des mobilen IP-Nodes (20) vom Access Server auf das Billing-Modul (1003) übertragbar sind (1011) und wobei das Billing Gateway Interface (1031) eine zugeordnete Billing-Management-Datenbank (1032) mit den Konfigurationen der einzelnen Access Server (23/1001) umfasst,
**dass** mittels einem Proxy-Modul (1002) zweite Call Detail Records des mobilen IP-Nodes (20) vom Access Server (1001) downloadbar sind (1010), wobei mit dem Proxy-Modul (1002) mindestens Identität des mobilen IP-Nodes (20), Zeitdauer und Anbieter der beanspruchten Leistung erfassbar sind und an das Billing-Modul (1003) weitergebbar sind (1012),
**dass** mittels dem Billing-Modul (1003) der beanspruchten Leistung entsprechende TAP-Files (1014) erzeugbar sind und diese zusammen mit Fakturierungsanweisungen (1013) an ein Clearing-Modul (1004) übermittelbar sind, wobei die Fakturierungsanweisungen (1013) mindestens benutzerspezifische und dienstanbieterspezifische Verrechnungsdaten umfassen.

9. System nach Anspruch 8, **dadurch gekennzeichnet, dass** mittels dem Access Server (23/1001) zweite Call Detail Records mindestens basierend auf der IP-Adresse des mobilen IP-Nodes (20) und Identifikationen der Dienstanbieter, deren Leistung vom mobilen Node beansprucht wurde, erstellbar sind.

10. System nach einem der Ansprüche 8 oder 9, **dadurch gekennzeichnet, dass** der Datenstrom des mobilen IP-Nodes (20) beim Zugriff auf das WLAN vom Access Point (21/22) über einen Mobilfunknetzdienstanbieter leitbar ist.

11. System nach einem der Ansprüche 8 bis 10, **dadurch gekennzeichnet, dass** die TAP-Files (1014) mindestens Informationen bezüglich Inter Operator Tariffs sowie Public Mobile Network TAP Identification Codes umfassen.

12. System nach einem der Ansprüche 8 bis 11, **dadurch gekennzeichnet, dass** die Billing-Management-Datenbank (1032) IP-Adressen und/oder GSM-Identitifizierung der Benutzer und/oder Dienstanbieter umfasst.

13. System nach einem der Ansprüche 8 bis 12, **dadurch gekennzeichnet, dass** die Billing-Management-Datenbank (1032) Inter Operator Tariffs sowie Public Mobile Network TAP Identification Codes umfasst.

14. System nach einem der Ansprüche 8 bis 13, **dadurch gekennzeichnet, dass** die ersten SIM-basierende Call Detail Records des mobilen IP-Nodes (20) vom Access Server (23/1001) zum Billing-Modul (1003) und die zweiten IP-basierende Call Detail Records vom Access Server (23/1001) zum Proxy-Modul (1002) übermittelt werden (1010/1011).

## Claims

1. Computer-aided process for activity recording and accounting during roaming of a mobile IP-node (20) in heterogeneous WLANs, wherein the mobile IP-node (20) accesses to an access point (21/22) of a WLAN via a wireless interface within a basic surface area of a WLAN, wherein the basic surface area of the WLAN comprises one or plural access points (21/22) assigned to an access server (23/1001), where, upon request of the access server (23/1001), the mobile IP-node (20) transmits an IMSI stored on a SIM-card (201) of the mobile IP-node (20) to the access server (23/1001) and the IMSI of the IP-node (20) is stored in a database (31) of a SIM RADIUS module (30), **characterized in,**
**that** on the basis of the IMSI, the logical IP data channel of the WLAN is user-specifically supplemented with corresponding GSM data for signal and data channels of a GSM network by means of information stored in a SIM user database (34), wherein the necessary SS7/MAP functions are generated on the basis of the GSM data by means of a SIM gateway module (32) for carrying out the authentication and service authorization of the IP node (20), and wherein the SIM RADIUS module (30) performs the authentication and service authorization of the mobile IP node (20) on the basis of the IMSI of the SIM card (201) of the mobile node (20) at an HLR (37) of a GSM network by means of SIM user database (34) and SIM gateway module (32),
**that** with successful authentication, a location update is processed with the HLR (37) and the mobile IP-Node (20) receives a corresponding entry in a customer database of the access server (23), and the WLAN is released to the use by the mobile IP-Node (20),
**that** a billing module (1003) accesses to the access server (23/1001) by means of a billing gateway interface (1031), wherein first call detail records of the mobile IP-node (20) are transferred (1011) from the access server (23/1001) to the billing module (1003) and wherein the billing gateway interface (1031) comprises an associated billing management database (1032) having the configuration profile of each access server (23/1001),
**that** second call detail records of the mobile IP-node (20) are transmitted (1010) to a proxy module (1002), which proxy module (1002) acquires and forwards (1012) to the billing module (1003) at least identity of the mobile IP-node (20) and time period and provider of the claimed activity or used service, and
**that** the billing module (1003) generates TAP-files (1014) in correspondence with the claimed activity or used service based on the data of the proxy module (1002) and the first call detail records (1011) and transmits them together with invoicing instructions (1013) to a clearing module (1004), wherein the invoicing instructions (1013) comprise at least user specific and service provider specific accounting data and wherein the clearing module (1004) places (1016) the claimed activity or used service of the user (1008) to the account of a provider (1008) of a wired network (1007) and/or transmits the TAP-files (1017) for placing them to the account of a GSM (1005) service provider (1006).

2. Computer-aided process according to claim 1, **characterized in, that** a first call detail record is constructed at least based on the IP address of the mobile IP-node (20) and identifications of service providers, the services or activities of which were used or claimed by the mobile node.

3. Computer-aided process according to claim 1 or 2, **characterized in, that**, during an access to the WLAN by the access point (21/22), the data flow of the mobile node (20) is guided or directed over a mobile network service provider.

4. Computer-aided process according to any of the claims 1 to 3, **characterized in, that** the TAP-files (1014) are constructed at least based on inter operator tariffs as well as public mobile network TAP identification codes.

5. Computer-aided process according to any of the claims 1 to 4, **characterized in, that** the billing management database (1032) comprises IP addresses and/or GSM identification of the users and/or service providers.

6. Computer-aided process according to any of the claims 1 to 5, **characterized in, that** the billing management database (1032) comprises inter operator tariffs as well as public mobile network TAP identification codes.

7. Computer-aided process according to any of the claims 1 to 6, **characterized in, that** the second SIM based call detail records of the mobile IP-nodes (20) are transmitted (1010) from the access server (23/1001) to the billing module (1003) and the first IP based call detail records are transmitted (1011) from the access server (23/1001) to the proxy module (1002).

8. System for activity recording and accounting during roaming of a mobile IP-node (20) in heterogeneous WLANs, the system comprising at least a WLAN, each having a basic surface area, which basic surface area of a WLAN comprises one or plural access points (21/22) assigned to an access server (23/1001), which access points (21/22) comprise a wireless interface (211) for communicating with mobile IP-nodes (20) and which mobile IP-nodes (20) comprise a SIM-card (201) for storing an IMSI, **characterized in,**
**that** the access server (23/1001) comprises a SIM RADIUS module (30), a SIM user database (34) and a SIM gateway module (32) for a user specific supplementation of the logic IP data channel of the WLAN to corresponding GSM data for signal and data channels of a GSM network, wherein by means of a SIM gateway module (32) the necessary SS7/MAP functions are generated for performing the authentication and service authorization of the mobile IP node (20), and wherein the authentication and service authorization of the mobile IP-node (20) is performed based on the IMSI of the SIM-card (201) of the mobile node (20) at a HLR (37) of a GSM network by means of the SIM RADIUS module (30), the SIM user database (34) and the SIM gateway module (32),
**that** with successful authentication, a location update is processed with the HLR (37) and the mobile IP-Node (20) receives a corresponding entry in a customer database of the access server (23) upon successful authentication, and the WLAN is released to the use by the mobile IP-Node (20),
**that** the access server (23/1001) comprises a billing module (1003) having a billing gateway interface (1031) for the access to an access server (23/1001), wherein first call detail records of the mobile IP-node (20) are transferable (1011) from the access server to the billing module (1003) and wherein the billing gateway interface (1031) comprises an associated or assigned billing management database (1032) having the configurations of each of the access servers (23/1001),
**that** second call detail records of the mobile IP nodes (20) are downloaded (1010) from the access server (1001) by means of a proxy module (1002), wherein at least identity of the mobile IP-nodes (20), time period and provider of the used or claimed activity are detected by means of the proxy module (1002) and are forwarded (1012) to the billing module (1003), and
**that** TAP-files (1014) corresponding to the claimed activity or used service are generated by means of the billing module (1003) and are, together with invoicing instructions (1013), transmitted to a clearing module (1004), wherein the invoicing instructions (1013) comprise at least user specific and service provider specific accounting or billing data.

9. System according to claim 8, **characterized in, that** second call detail records, at least based on the IP address of the mobile IP-node (20) and identifications of the service provider, the service of which was used by the mobile node, are constructed by means of the access server (23/1001).

10. System according to claim 8 or 9, **characterized in, that**, during the access to the WLAN by the access point (21/22), the data flow of the mobile IP-node (20) is guided or directed over a mobile network service provider.

11. System according to any of the claims 8 to 10, **characterized in, that** the TAP-files (1014) comprise at least information with respect to inter operator tariffs as well as public mobile network TAP identification codes.

12. System according to any of the claims 8 to 11, **characterized in, that** the billing management database (1032) comprise IP addresses and/or GSM identification of the users and/or service providers.

13. System according to any of the claims 8 to 12, **characterized in, that** the billing management database (1032) comprise inter operator tariffs as well as public mobile network TAP identification codes.

14. System according to any of the claims 8 to 13, **characterized in, that** the first SIM based call detail records of the mobile IP-node (20) are transmitted (1010) from the access server (23/1001) to the billing module (1003) and the second IP based call detail records are transmitted (1011) from the access server (23/1001) to the proxy module (1002).

## Revendications

1. Procédé assisté par ordinateur pour l'enregistrement et la facturation de prestations lors de l'itinérance d'un noeud IP mobile (20) dans des WLANs hétérogènes, où ledit noeud IP mobile (20) accède à un point d'accès (21/22) d'un WLAN par un interface sans fil à l'intérieur d'une Basic Service Area d'un WLAN, où ladite Basic Service Area du WLAN comprend un ou plusieurs points d'accès (21/22) affectés à un serveur d'accès (23/1001), où le noeud IP mobile (20) transmet sur demande du serveur d'accès (23/1001) un IMSI qui est sauvegardé sur une carte SIM (201) du noeud IP mobile (20) au serveur d'accès (23/1001) et l'IMSI du noeud IP (20) est sauvegardé dans une base de données (31) d'un module SIM-RADIUS (30), **caractérisé**
**en ce que** un module SIM-Radius (30) complète, de manière spécifique à l'utilisateur, au moyen d'une base de données d'utilisateurs SIM (34) et d'un module SIM-Gateway (32), le canal de données IP logique du WLAN en des données GSM correspondantes pour les canaux de signaux et de données d'un réseau GSM, où au moyen d'un module SIM-Gateway (32), les fonctions SS7/MAP nécessaires sont générées pour la réalisation de l'authentification et de l'autorisation de service du noeud IP (20) en se basant sur les données GSM, où le module SIM-RADIUS (30) au moyen d'une base de données d'utilisateurs SIM (34) et d'un module SIM-Gateway (32) réalise l'authentification et l'autorisation de service du noeud IP mobile (20), basée sur l'IMSI de la carte SIM (201) du noeud mobile (20) dans un HLR (37) d'un réseau GSM,
**en ce que** lors d'une authentification réussie est réalisé un Location Update dans le HLR (37) et le noeud IP mobile (20) obtient un enregistrement correspondant dans une Customer Database du serveur d'accès (23), où le WLAN est débloqué pour l'utilisation par le noeud IP mobile (20),
**en ce qu'**un module de facturation (1003) accède au moyen d'un interface Billing Gateway (1031) au serveur d'accès (23/1001), où des premiers Call Detail Records du noeud IP mobile (20) sont transmis (1011) du serveur d'accès (23/1001) vers le module de facturation (1003) et où l'interface Billing Gateway (1031) comprend une base de données de gestion de la facturation (1032) affectée avec le profil de configuration de chaque serveur d'accès (23/1001),
**en ce que** des seconds Call Detail Records du noeud IP mobile (20) sont transmis (1010) à un module proxy (1002), où le module proxy (1002) enregistre au moins l'identité du noeud IP mobile (20) et la durée de temps et le fournisseur de la prestation sollicitée et le transmet (1012) au module de facturation (1003), et
**en ce que** le module de facturation (1003), selon la prestation sollicitée, se basant sur les données du module proxy (1002) et les premiers Call Detail Records (1011), génère des fichiers TAP (1014) et transmet ceux-ci ensemble avec les instructions de facturation (1013) à un module de Clearing (1004), où les instructions de facturation (1013) comprennent au moins des données de facturation spécifiques à l'utilisateur et spécifiques au fournisseur de services, et où le module de Clearing (1004) facture (1016) la prestation sollicitée de l'utilisateur (1008) à un fournisseur (1008) de téléphone fixe (1007) et/ ou transmet les fichiers TAP (1017) à un fournisseur de services (1006) GSM (1005) pour la facturation.

2. Procédé assisté par ordinateur selon la revendication 1, **caractérisé en ce qu'**un premier Call Detail Record est constitué, se basant au moins sur l'adresse IP du noeud IP mobile (20) et l'identification du fournisseur de services, duquel la prestation est sollicitée.

3. Procédé assisté par ordinateur selon l'une des revendications 1 ou 2, **caractérisé en ce que** le flux de données du noeud IP mobile (20) est conduit par un fournisseur de services du réseau de radiocommunication mobile lors de l'accès au WLAN depuis le point d'accès (21/22).

4. Procédé assisté par ordinateur selon l'une quelconque des revendications 1 à 3, **caractérisé en ce que** les fichiers TAP (1014) sont générés en se basant au moins sur les tarifs inter-opérateurs ainsi que les Public Mobile Network TAP Identification Codes.

5. Procédé assisté par ordinateur selon l'une quelconque des revendications 1 à 4, **caractérisé en ce que** la base de données de gestion de la facturation (1032) comprend des adresses IP et/ ou l'identification GSM de l'utilisateur et/ ou du fournisseur de services.

6. Procédé assisté par ordinateur selon l'une quelconque des revendications 1 à 5, **caractérisé en ce que** la base de données de gestion de la facturation (1032) comprend des tarifs inter-opérateurs ainsi que des Public Mobile Network TAP Identification Codes.

7. Procédé assisté par ordinateur selon l'une quelconque des revendications 1 à 6, **caractérisé en ce que** les seconds Call Detail Records du noeud IP mobile (20) basés sur le SIM sont transmis (1011) depuis le serveur d'accès (23/1001) vers le module de facturation (1003) et les premiers Call Detail Records basés sur l'IP sont transmis (1010) depuis le serveur d'accès (23/1001) vers le module proxy (1002).

8. Système pour l'enregistrement et la facturation de prestations lors de l'itinérance d'un noeud IP mobile (20) dans des WLANs hétérogènes, où ledit système comprend au moins un WLAN avec à chaque fois une Basic Service Area, où ladite Basic Service Area d'un WLAN comprend un ou plusieurs points d'accès (21/22) affectés à un serveur d'accès (23/1001), où lesdits points d'accès (21/22) comprennent un interface sans fil (211) pour la communication avec des noeuds IP mobiles (20) et où lesdits noeuds IP mobiles (20) comprennent une carte SIM (201) pour la sauvegarde d'un IMSI, **caractérisé**
**en ce que** le serveur d'accès (23/1001) comprend un module SIM-Radius (30), une base de données d'utilisateurs SIM (34) et un module SIM-Gateway (32) pour compléter de manière spécifique à l'utilisateur le canal de données IP logique du WLAN en des données GSM correspondantes pour les canaux de signaux et de données d'un réseau GSM, où au moyen du module SIM-Gateway (32), les fonctions SS7/MAP nécessaires peuvent être générées pour la réalisation de l'authentification et de l'autorisation de service du noeud IP (20) en se basant sur les données GSM, et où l'authentification et l'autorisation de service du noeud IP mobile (20) sont réalisées au moyen du module SIM-RADIUS (30), de la base de données d'utilisateurs SIM (34) et du module SIM-Gateway (32), basée sur l'IMSI de la carte SIM (201) du noeud mobile (20), dans un HLR (37) d'un réseau GSM,
**en ce que** lors d'une authentification réussie un Location Update peut être réalisé dans le HLR (37) et le noeud IP mobile (20) obtient un enregistrement correspondant dans une Customer Database du serveur d'accès (23), où le WLAN est débloqué pour l'utilisation par le noeud IP mobile (20),
**en ce que** le serveur d'accès (23/1001) comprend un module de facturation (1003) avec un Billing Gateway Interfaces (1031) pour l'accès à des serveur d'accès (23/1001), où des premiers Call Detail Records du noeud IP mobile (20) sont transférables (1011) depuis le serveur d'accès vers le module de facturation (1003) et où le Billing Gateway Interface (1031) comprend une base de données de gestion de la facturation (1032) affectée avec les configurations des serveurs d'accès (23/1001) individuels,
**en ce qu'**avec le module proxy (1002) des seconds Call Detail Records du noeud IP mobile (20) sont téléchargeables (1010) depuis le serveur d'accès (1001), où au moins l'identité du noeud IP mobile (20), la durée de temps et le fournisseur de la prestation sollicitée peuvent être enregistrés et transmis (1012) avec le module proxy (1002) au module de facturation (1003), et
**en ce qu'**avec le module de facturation (1003) peuvent être générés des fichiers TAP (1014) correspondants à la prestation sollicitée et que ceux-ci peuvent être transmis ensemble avec des instructions de facturation (1013) à un module de Clearing (1004), où lesdites instructions de facturation (1013) comprennent au moins des données de facturation spécifiques à l'utilisateur et au fournisseur de services.

9. Système selon la revendication 8, **caractérisé en ce qu'**au moyen du serveur d'accès (23/1001) des seconds Call Detail Records, basés au moins sur l'adresse IP du noeud IP mobile (20) et l'identification des fournisseurs de services, desquels la prestation a été sollicitée par le noeud mobile, peuvent être générés.

10. Système selon l'une des revendications 8 ou 9, **caractérisé en ce que** le flux de données du noeud IP mobile (20) peut être conduit par un fournisseur de services du réseau de radiocommunication mobile lors d'un accès sur le WLAN depuis le point d'accès (21/22).

11. Système selon l'une quelconque des revendications 8 à 10, **caractérisé en ce que** les fichiers TAP (1014) comprennent au moins des informations concernant les tarifs inter-opérateurs ainsi que des Public Mobile Network TAP Identification Codes.

12. Système selon l'une quelconque des revendications 8 à 11, **caractérisé en ce que** la base de données de gestion de la facturation (1032) comprend des adresses IP et/ ou l'identification GSM de l'utilisateur et/ ou du fournisseur de services.

13. Système selon l'une quelconque des revendications 8 à 12, **caractérisé en ce que** la base de données de gestion de la facturation (1032) comprend des tarifs inter-opérateurs ainsi que des Public Mobile Network TAP Identification Codes.

14. Système selon l'une quelconque des revendications 8 à 13, **caractérisé en ce que** les premiers Call Detail Records du noeud IP mobile (20) basés sur le SIM sont transmis (1011) depuis le serveur d'accès (23/1001) vers le module de facturation (1003) et les seconds Call Detail Records basés sur l'IP sont transmis (1010) depuis le serveur d'accès (23/1001) vers le module proxy (1002).
